(19) Europäisches Patentamt
European Patent Office
Office européen des brevets

(11) Veröffentlichungsnummer: **0 307 666**
**A1**

(12) # EUROPÄISCHE PATENTANMELDUNG

(21) Anmeldenummer: **88113697.2**

(22) Anmeldetag: **23.08.88**

(51) Int. Cl.4: **C08G 18/10 , C08G 18/32 , C08G 18/67 , C08G 18/77 , C08G 71/00 , C08L 63/00 , C09J 3/16 , C09K 3/10 , C09D 3/58**

Patentansprüche für folgenden Vertragsstaat: ES.

(30) Priorität: **26.08.87 CH 3264/87**
**21.03.88 CH 1070/88**

(43) Veröffentlichungstag der Anmeldung:
**22.03.89 Patentblatt 89/12**

(84) Benannte Vertragsstaaten:
**BE CH DE ES FR GB IT LI NL SE**

(71) Anmelder: **CIBA-GEIGY AG**
**Klybeckstrasse 141**
**CH-4002 Basel(CH)**

(72) Erfinder: **Mülhaupt, Rolf, Dr.**
**Chemin de la Prairie 2**
**CH-1723 Marly(CH)**
Erfinder: **Powell, Jeremy Hugh**
**Wapentake Linton Road**
**Horseheath Cambridge CB1 6QF(GB)**
Erfinder: **Reischmann, Franz-Josef, Dr.**
**Im Lenzen 6**
**D-7889 Grenzach-Wyhlen(DE)**

(74) Vertreter: **Zumstein, Fritz, Dr. et al**
**Bräuhausstrasse 4**
**D-8000 München 2(DE)**

(54) **Phenol-terminierte Polyurethane oder Polyharnstoffe und Epoxidharze enthaltend diese Verbindungen.**

(57) Beschrieben werden wasserunlösliche Verbindungen der Formel I

$$R^1\left[NR^2-\overset{O}{\overset{\|}{C}}-X-R^3-(OH)_m\right]_n \qquad (I),$$

worin m 1 oder 2 ist, n 2 bis 6 bedeutet, $R^1$ der n-wertige Rest eines in Epoxidharzen löslichen oder dispergierbaren, elastomeren Präpolymeren nach dem Entfernen der endständigen Isocyanat- oder Aminogruppen ist,
$R^2$ Wasserstoff, $C_1$-$C_6$Alkyl oder Phenyl bedeutet,
$R^3$ ein m+1-wertiger Rest eines Polyphenols oder Aminophenols nach dem Entfernen der phenolischen Hydroxylgruppen und gegebenenfalls der Aminogruppe ist, und X -O- oder -$NR^2$- bedeutet.
Diese Verbindungen lassen sich mit Epoxidharzen zu Klebstoffen kombinieren.

EP 0 307 666 A1

Xerox Copy Centre

## Phenol-terminierte Polyurethane der Polyharnstoffe und Epoxidharze enthaltend diese Verbindungen

Die vorliegende Erfindung betrifft neue phenol-terminierte Polyurethane und Polyharnstoffe, härtbare Gemische enthaltend Epoxidharze und diese Verbindungen, sowie die Verwendung dieser Verbindungen als Flexibilisatoren für Epoxidharze und die Verwendung der härtbaren Gemische als Klebstoffe.

Phenol-verkappte Polyurethane sind aus der DE-A-2,152,606 bekannt. Die vorbekannten Verbindungen werden durch Umsetzung von präpolymeren Diisocyanaten mit gegebenenfalls substituierten Monophenolen erhalten. Die Produkte besitzen keine freien, phenolischen Hydroxylgruppen mehr. Die Verbindungen werden zusammen mit Epoxidharzen und Polyaminhärtern zu härtbaren Beschichtungsmitteln kombiniert, die sich durch besondere Elastizität auszeichnen.

Aus der SU-A-857,156 sind Gemische bekannt, die Umsetzungsprodukte eines isocyanat-terminierten Butadien-Isoprenoligomeren mit einem chlorhaltigen Bisphenol enthalten. Diese Gemische werden als Zwischenprodukte zur Herstellung von Polyestern eingesetzt und sie enthalten in der Regel einen hohen Ueberschuss an Bisphenol. Die verwendeten Butadien-Isoprenoligomeren sind mit Epoxidharzen nicht genügend verträglich.

Aus der US-A-4,423,201 sind wasserlösliche oder teilweise wasserlösliche phenol-terminierte Polyurethane bekannt, die sich von wasserlöslichen oder teilweise wasserlöslichen Polyalkylenglykolen, Diisocyanaten und Bisphenolen ableiten. Diese Verbindungen werden zusammen mit Epoxidharzen und Phenolen zu wasserdispergierbaren Epoxidharzen umgesetzt. Die modifizierten Epoxidharze lassen sich als Beschichtungsmittel einsetzen. Aufgrund ihres hohen Anteils an hydrophilen Gruppen neigen die gehärteten Produkte zur Wasseraufnahme und zur Quellung bei der Wasserlagerung.

Aus der FR-A-1,326,963 sind thermoplastische Klebmittel bekannt, die durch Umsetzung von präpolymeren Isocyanaten, welche sich von Polyalkylenglykolen ableiten, mit einer im wesentlichen stöchiometrischen Menge von cycloaliphatischen oder aromatischen Diolen erhalten werden. Die Verbindungen sind im wesentlichen linear und besitzen ein hohes Molekulargewicht; sie können als Schmelzkleber eingesetzt werden. Aufgrund ihres hohen Molekulargewichts sind diese Verbindungen entweder in Epoxidharzen unlöslich oder sie führen zu hochviskosen Produkten mit einer Tendenz zur Verfestigung. Phenol-verkappte Präpolymere sind nicht beschrieben.

Aus der US-A-4,396,647 sind Kombinationen von aromatischen Polyolen mit polyfunktionellen Isocyanaten bekannt. Diese Gemische weisen keine freien phenolischen Hydroxylgruppen auf und können durch Begasung mit einem tertiären Amin zu unlöslichen, vernetzten Produkten ausgehärtet werden. Mit den Gemischen lassen sich Beschichtungen herstellen.

Aus der US-A-3,442,974 sind lagerstabile Epoxidzusammensetzungen bekannt, die ein mit einem Mono- oder Polyphenol blockiertes Polyisocyanat enthalten. Es werden keine phenol-verkappten Polyisocyanate beschrieben, welche elastomere Eigenschaften besitzen.

Schliesslich sind aus der FR-A-1,518,546 Polyurethane bekannt, die sich von der Umsetzung von Polyisocyanaten mit Polyphenolen ableiten. Die Produkte weisen entweder einen hohen Erweichungspunkt auf und besitzen ein hohes Molekulargewicht, oder es handelt sich um isocyanat-terminierte Polyurethane, die durch Feuchtigkeitseinwirkung über die Isocyanatgruppen vernetzen können. Die Verbindungen eignen sich als Lacke.

Es wurden jetzt ausgewählte präpolymere phenolverkappte Polyurethane und Polyharnstoffe gefunden, die mit Epoxidharzen gut verträglich sind, über die phenolischen Hydroxylgruppe mit den Epoxidharzen vernetzt werden können und die zu Produkten mit guter Wasserbeständigkeit führen. Diese Polyurethane oder Polyharnstoffe verleihen gehärteten Epoxidharzen eine gute Flexibilität, einen hohen Schälwiderstand, sowie eine sehr gute Haftung auf Metallen, insbesondere auf öligem Stahl.

Die vorliegende Erfindung betrifft wasserunlösliche Verbindungen der Formel I

$$R^1\left[-NR^2-\overset{O}{\overset{\|}{C}}-X-R^3-(OH)_m\right]_n \qquad (I),$$

worin m 1 oder 2 ist, n 2 bis 6 bedeutet, $R^1$ der n-wertige Rest eines in Epoxidharzen löslichen oder dispergierbaren, elastomeren Präpolymeren nach dem Entfernen der endständigen Isocyanat oder Aminogruppen ist, $R^2$ Wasserstoff, $C_1$-$C_6$Alkyl oder Phenyl bedeutet, $R^3$ ein m + 1-wertiger Rest eines Polyphenols oder Aminophenols nach dem Entfernen der phenolischen Hydroxylgruppen und gegebenenfalls der

Aminogruppe ist, und X -O- oder $-NR^2-$ bedeutet.

Unter einer "wasserunlöslichen Verbindung" versteht man im Rahmen dieser Beschreibung eine Verbindung, die sich zu weniger als 5 Gew.%, vorzugsweise weniger als 0,5 Gew.%, in Wasser löst, und die bei der Wasserlagerung nur eine geringe Menge Wasser aufnimmt, vorzugsweise weniger als 5 Gew.%, insbesondere weniger als 0,5 Gew.%, oder dabei lediglich eine geringe Quellung zeigt.

Unter einem "elastomeren Präpolymerrest $R^1$" versteht man im Rahmen dieser Beschreibung einem mit n-Isocyanat- oder -Aminogruppen terminierten Rest eines Präpolymeren, der nach der Verkappung dieser Gruppen zu einer Verbindung der Formel I führt, welche in Kombination mit Epoxidharzen nach der Härtung die Elastomerphase ergibt. Dabei kann es sich um homogene oder um heterogene Kombinationen mit Epoxidharzen handeln. Die Elastomerphase ist in der Regel durch eine Glasübergangstemperatur von weniger als 0° C gekennzeichnet.

Unter einem "in Epoxidharzen löslichen oder dispergierbaren Präpolymeren" versteht man im Rahmen dieser Beschreibung einen mit n-Isocyanat- oder -Aminogruppen terminierten Rest eines Präpolymeren, der nach der Verkappung dieser Gruppen zur einer Verbindung der Formel I führt, die in Epoxidharzen löslich ist oder ohne weitere Hilfsmittel, wie z.B. Emulgatoren, in Epoxidharzen dispergierbar ist; die also im Kombination mit Epoxidharzen zu keiner makroskopischen Phasenseparation beider Komponenten führt.

Im Falle von heterogenen Systemen sollte die Differenz der Löslichkeitsparameter beider Komponenten zwischen 0,2 und 1,0, bevorzugt zwischen 0,2 und 0,6, liegen. Diese Auswahlkriterien sind beispielsweise in "C.B. Bucknall: Toughened Plastics, Kapitel 2, Applied Science Publishers Ltd., London 1977" beschrieben.

Die $R^1$ zugrundliegenden Präpolymeren besitzen in der Regel Molekulargewichte (Zahlenmittel) von 150 bis 10000, vorzugsweise von 1500 bis 3000.

Die mittlere Funktionalität dieser Präpolymeren beträgt wenigstens 2, bevorzugt 2 bis 3, und besonders bevorzugt 2 bis 2,5.

$R^2$ ist vorzugsweise Methyl, insbesondere aber Wasserstoff.

Die Verbindungen der Formel I lassen sich, je nach der Natur des $R^1$ zugrundeliegenden Präpolymeren, auf unterschiedlichen Wegen herstellen.

Im Falle von präpolymeren Isocyanaten lassen sie sich durch Umsetzung von Verbindungen der Formel IIa mit Polyphenolen oder Aminophenolen der Formel IIIa herstellen (Verfahren a)

$R^1-(NCO)_n$ (IIa),

$H-X-R^3-(OH)_m$ (IIIa);

Polyharnstoffe der Formel I lassen sich auch durch Umsetzung von Verbindungen der Formel IIb mit Urethanen der Formel IIIb erhalten (Verfahren b)

$R^1-(NR^2H)_n$ (IIb),

$R^{11}-O-\overset{O}{\overset{\|}{C}}-NR^2-R^3-(OH)_m$ (IIIb);

Verbindungen der Formel I mit ortho- oder peri-Phenolen oder Aminophenolen als Endgruppen lassen sich auch durch Umsetzung von Verbindungen der Formel IIb mit cyclischen Carbonaten oder Urethanen der Formel IIIc herstellen (Verfahren c)

$R^1-(NR^2H)_n$ (IIb),

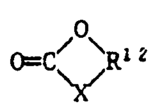
(IIIc);

in diesen Formeln IIa, IIb, IIIa, IIIb und IIIc besitzen die Reste $R^1$, $R^2$, $R^3$ und X sowie die Indizes m und n die weiter oben definierte Bedeutung, $R^{11}$ ist ein als Abgangsgruppe fungierender Rest, beispielsweise ein Alkyl- oder Arylrest, insbesondere $C_1$-$C_6$Alkyl oder Phenyl, und $R^{12}$ ist ein zweiwertiger carbocyclisch-aromatischer Rest mit einer der für $R^3$ definierten Bedeutungen, an dem die Gruppen -O-und -X- sich jeweils in ortho- oder peri-Stellung zueinander befinden.

Der Rest $R^3$ leitet sich im allgemeinen von Phenolen oder Aminophenolen mit einem ein- oder mehrkernigen carbocyclisch-aromatischen Rest ab.

Phenol- oder Aminophenolreste mit mehreren carbocyclisch-aromatischen Resten können kondensiert oder bevorzugt über Brückenglieder verknüpft sein.

Beispiele für Phenole oder Aminophenole mit kondensierten Resten sind Dihydroxynaphthaline oder -anthracene oder Aminonaphthole.

Bevorzugte Reste $R^3$ leiten sich von Bisphenolen der Formel IV ab

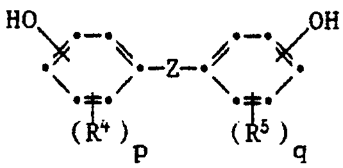 (IV),

worin Z eine direkte C-C-Bindung ist oder ein Brückenglied ausgewählt aus der Gruppe bestehend aus $-CR^6R^7-$, -O-, -S-, $-SO_2-$, -CO-, -COO-, $-CONR^8-$ und $-SiR^9R^{10}-$ ist, $R^4$ und $R^5$ unabhängig voneinander $C_1$-$C_{20}$Alkyl, $C_2$-$C_6$Alkenyl, $C_2$-$C_6$Alkinyl oder Halogen darstellen, p und q unabhängig voneinander 0, 1 oder 2 bedeuten, $R^6$, $R^7$ und $R^8$ unabhängig voneinander Wasserstoff, $-CF_3$ oder $C_1$-$C_6$Alkyl sind oder $R^6$ und $R^7$ zusammen mit dem gemeinsamen C-Atom einen cycloaliphatischen Rest mit 5-12 Ring-C-Atomen bilden und $R^9$ und $R^{10}$ $C_1$-$C_6$Alkyl bedeuten.

Besonders bevorzugte Reste $R^3$ leiten sich von Verbindungen der Formel IV ab, worin die Hydroxylgruppen in 4,4′-Stellung gebunden sind; besonders von den Derivaten, worin p und q 1 sind und $R^4$ und $R^5$ Allyl bedeuten.

Weitere besonders bevorzugte Reste $R^3$ leiten sich von Bisphenolen der Formel IV ab, worin Z ausgewählt wird aus der Gruppe bestehend aus $-CH_2-$, $-C(CF_3)_2-$,-O-, $-SO_2-$, einer direkten C-C Bindung und besonders $-C(CH_3)_2-$, p und q jeweils 0 oder 1 sind und $R^4$ und $R^5$ $C_1$-$C_6$Alkyl, $C_2$-$C_6$Alkenyl, besonders Allyl, oder $C_2$-$C_6$Alkinyl, besonders Propargyl, bedeuten.

Weitere bevorzugte Reste $R^3$ leiten sich von einkernigen Aminophenolen, beispielsweise von 2-, 3- oder 4-Aminophenol, ab.

Weitere bevorzugte Reste $R^3$ leiten sich von einkernigen Polyphenolen, beispielsweise von Resorcin, Hydrochinon oder Pyrogallol, ab.

Besonders bevorzugte Reste $R^3$ leiten sich von Bisphenolen ab; Beispiele dafür sind 4,4′-Dihydroxybiphenyl, Bis-(4-hydroxyphenyl)-ether, Bis-(4-hydroxyphenyl)-sulfon, Bis-(4-hydroxyphenyl)-methan, 2,2-Bis-(4-hydroxyphenyl)-propan sowie die entsprechenden 3,3′-Dimethyl-, 3,3′-Dinonyl-, 3,3′Diallyl-, 3,3′-Dichlor-, 3,3′-Dibrom- und 3,3′,5,5′-Tetrabromderivate dieser Verbindungen.

Bedeuten $R^4$ oder $R^5$ $C_1$-$C_{20}$Alkyl, so handelt es sich dabei um geradkettige oder verzweigte Reste.

Beispiele dafür sind Methyl, Ethyl, n-Propyl, Isopropyl, n-Butyl, Isobutyl, tert.Butyl, n-Pentyl, n-Hexyl, 2-Etyhlbutyl, n-Heptyl, n-Octyl, 2-Ethylhexyl, n-Nonyl, n-Decyl, n-Undecyl, n-Dodecyl, n-Tetradecyl, n-Hexadexyl, n-Octadecyl oder n-Eicosyl.

Vorzugsweise sind $R^4$ und $R^5$ $C_1$-$C_6$Alkyl, besonders bevorzugt geradkettiges $C_1$-$C_6$Alkyl und ganz besonders bevorzugt Methyl.

Bedeuten irgendwelche Reste $C_1$-$C_6$Alkyl, so handelt es sich dabei vorzugsweise um geradkettige Reste, also um Methyl, Ethyl, n-Propyl, n-Butyl, n-Pentyl oder n-Hexyl, ganz besonders jedoch Methyl.

$R^4$ und $R^5$ bedeuten als $C_2$-$C_6$Alkenyl beispielsweise Vinyl, Allyl, 1-Propenyl, 1-Butenyl, 1-Pentenyl oder 1-Hexenyl. Bevorzugt werden Vinyl, 1-Propenyl und Allyl, ganz besonders Allyl.

$R^4$ und $R^5$ bedeuten als $C_2$-$C_6$Alkinyl beispielsweise Ethinyl, Propargyl, 1-Butinyl, 1-Pentinyl oder 1-Hexinyl. Bevorzugt wird Propargyl.

Sind $R^4$ und $R^5$ Halogen, so kann es sich dabei um Fluor, Chlor, Brom oder Iod handeln. Bevorzugt werden Chlor oder Brom.

Verbindungen der Formel IV mit Alkyl- oder Alkenylsubstituenten verwendet man bevorzugt, wenn eine hohe Haftfestigkeit auf öligem Stahl gefragt ist.

Halogenierte Verbindungen der Formel IV erhöhen im allgemeinen die Flammfestigkeit.

Bilden $R^6$ und $R^7$ zusammen mit dem gemeinsamen C-Atom einen cycloaliphatischen Rest, so handelt es sich dabei beispielsweise um einen Cyclopentyliden-, Cyclohexyliden-, Cycloheptyliden-, Cyclooctyliden- oder Cyclododecylidenrest. Bevorzugt werden Cyclohexyliden oder Cyclododecyliden.

Bei dem Isocyanat der Formel IIa handelt es sich entweder um ein Präpolymeres a1), das sich ableitet von einer Addition eines Polyisocyanats, bevorzugt eines Di- oder Triisocyanats, ganz besonders bevorzugt eines Diisocyanats, an eine präpolymere Polyhydroxyl- oder Polysulfhydrylkomponente oder an ein Gemisch solcher präpolymeren Komponenten gegebenenfalls in Kombination mit Kettenverlängeren (kurzkettigen Polhydroxyl-, Polysulfhydryl- oder Polyaminverbindungen); oder um ein präpolymeres Polyisocyanat a2), das sich ableitet von einem präpolymeren Polyamin, vorzugsweise von einem präpolymeren Polyetheramin.

Präpolymere Komponenten zur Herstellung von a1) können Kondensations-oder Additionspolymere sein, die gegebenenfalls aufgepfropfte 1-Olefine enthalten können, wobei besagte 1-Olefine neben unpolaren auch polare Gruppen, wie Nitril-, Ester- oder Amidgruppen, aufweisen können. Beispiele für solche Polymere sind Polyester, Polyether, Polythioether, Polyacetale, Polyamide, Polyesteramide, Polyurethane, Polyharnstoffe, Alkydharze, Polycarbonate oder Polysiloxane, sofern diese Verbindungen hydroxyl- oder sulfhydryl-terminiert sind, zu wasserunlöslichen und in Epoxidharzen löslichen oder dispergierbaren Verbindungen der Formel I führen und diesen Elastomereigenschaften gemäss der obigen Definition verleihen. Bevorzugt sind Polyether oder segmentierte Präpolymere enthaltend Polyethersegmente, wie Polyetheramide, Polyether-urethane oder Polyether-harnstoffe.

Diese Verbindungen sind dem Fachmann auf dem Gebiet der Polyurethanchemie als Aufbaukomponenten für Polyurethane bekannt. Sie können linear oder verzweigt sein; bevorzugt werden lineare Typen. Bevorzugte Aufbaukomponenten für präpolymere Polyisocyanate a1) sind hydroxyl-terminierte Präpolymere mit mittleren Molekulargewichten (Zahlenmittel) von 150-10000, ganz besonders von 1500-3000.

Bei der Herstellung der präpolymeren Polyisocyanate a1) können neben den hydroxyl- oder sulfhydryl-terminierten Präpolymeren auch noch Kettenverlängerer anwesend sein.

Solche Monomeren sind bevorzugt difunktionell oder trifunktionell.

Verwendet man tri- oder höherfunktionell hydroxyl- oder sulfhydrylterminierte Präpolymere oder tri- oder höherfunktionelle Kettenverlängerer zur Herstellung der Komponente a1), so sind die Aufbaukomponenten so zu wählen, dass ein in organischen Lösungsmitteln lösliches oder zumindest quellbares Addukt a1) entsteht.

Der Vernetzungsgrad bei der Verwendung höherfunktioneller Aufbaukomponenten kann in an sich bekannter Weise durch Art und Mengenverhältnisse dieser Komponenten geregelt werden.

So wird bei Einsatz von difunktionellen Präpolymeren und tri- oder höherfunktionellen Kettenverlängerern in der Regel nur ein geringer Anteil der höherfunktionellen Komponente eingesetzt, während bei der Kombination von di- und tri- oder höherfunktionellen Präpolymeren in der Regel eine grössere Menge des höherfunktionellen Kettenverlängerer anwesend sein kann, ohne dass eine übermässige Vernetzung eintritt. Ferner wird der Vernetzungsgrad auch von der Funktionalität des Polyisocyanates abhängen. So wird man bei Anwesenheit von tri- oder höherfunktionellen hydroxyl- oder sulfhydryl-terminierten Aufbaukomponenten in der Regel Diisocyanate einsetzen, während man bei der Verwendung von difunktionellen hydroxyl- oder sulfhydryl-terminierten Aufbaukomponenten auch höherfunktionelle Isocyanate verwendet. Beispiele für präpolymere Aufbaukomponenten zur Herstellung von Polyisocyanaten a1) sind hydroxylterminierte Polyether.

Dazu zählen beispielsweise die Polyalkylenetherpolyole, die durch anionische Polymerisation, Copolymerisation oder Blockcopolymerisation von Alkylenoxiden, wie Propylenoxid oder Butylenoxid, mit di- oder polyfunktionellen Alkoholen, wie 1,4-Butandiol, 1,1,1-Trimethylolethan, 1,1,1-Trimethylolpropan, 1,2,6-Hexantriol, Glycerin, Pentaerithrit oder Sorbit, oder mit Aminen, wie Methylamin, Ethylendiamin oder 1,6-Hexylendiamin, als Starterkomponenten oder durch kationische Polymerisation oder Copolymerisation cyclischer Ether, wie Tetrahydrofuran oder Propylenoxid mit sauren Katalysatoren, wie $BF_3$•Etherat oder durch Polykondensation von unter Wasserabspaltung polykondensierbaren Glykolen, wie 1,6-Hexandiol, in Gegenwart saurer Veretherungskatalysatoren, wie p-Toluolsulfonsäure, erhalten werden. Ferner kann man auch Oxalkylierungsprodukte von Phosphorsäure oder phosphoriger Säure mit Propylenoxid, Butylenoxid oder Styroloxid verwenden. Diese Polyalkylenetherpolyole können auch einen geringen Anteil an Ethylenglykoleinheiten enthalten, solange dadurch die Unlöslichkeit der Verbindung der Formel I in Wasser erhalten bleibt.

Weitere bevorzugte hydroxyl-terminierte Polyether enthalten aufgepfropfte 1-Olefine, wie Acrylnitril, Styrol oder Acrylsäureester. Dabei beträgt der Gewichtsanteil der Pfropfkomponente in der Regel 10-50 %, insbesondere 10-30 %, bezogen auf die Menge des eingesetzten Polymers.

Weitere Beispiele für präpolymere Aufbaukomponenten zur Herstellung von Polyisocyanaten a1) sind hydroxyl-terminierte Polyesterpolyole, die sich von Di- und/oder Polycarbonsäuren und Di- und/oder Polyolen, bevorzugt von Dicarbonsäuren und Diolen ableiten.

Beispiele für solche Polykondensate sind die hydroxyl-terminierten Polyester, die sich durch Polykondensation von Adipinsäure, Sebazinsäure, Azelainsäure, Dimer- und Trimerfettsäuren, Phthalsäure, Isophthalsäure, Terephthalsäure, Tetrahydrophthalsäure, Hexahydrophthalsäure und Endomethylentetrahydrophthalsäure mit Propylenglykol, 1,4-Butandiol, 1,6-Hexandiol, Di-, Tri- und Tetrapropylenglykol, Di-, Tri- und Tetrabutylenglykol, 2,2-Dimethylpropan-1,3-diol, 1,1,1-Trimethylolpropan, 1,1,1-Trimethylolethan und 1,2,6-Hexantriol erhalten lassen.

Weitere geeignete präpolymere Aufbaukomponenten zur Herstellung von Polyisocyanaten a1) sind hydroxyl-terminierte Polybutadiene, die zusammen mit anderen hydroxyl-terminierten Präpolymeren, insbesondere mit Polyethern, zur Bildung von in Epoxidharzen löslichen oder dispergierbaren Präpolymeren eingesetzt werden.

Weitere Beispiele für geeignete präpolymere Aufbaukomponenten zur Herstellung von Polyisocyanaten a1) sind hydroxyl-terminierte Polycarbonate der genannten Di- oder Polyole; oder Polyesteramide, die unter zusätzlicher Verwendung von Aminoalkoholen, beispielsweise Ethanolamin, hergestellt werden können; oder Polymerisationsprodukte von Lactonen, beispielsweise von $\epsilon$-Caprolactonen; oder Polyalkylenthioetherpolyole, beispielsweise die Polykondensationsprodukte des Thiodiglykols mit sich und mit Diolen und/oder Polyolen, wie beispielsweise 1,6-Hexandiol, Triethylenglykol, 2,2-Dimethyl-1,3-propandiol oder 1,1,1-Trimethylolpropan; oder Polyacetale wie beispielsweise die Polykondensationsprodukte aus Formaldehyd und Diolen und/oder Polyolen, wie zum Beispiel, 1,4-Butandiol, 1,6-Hexandiol, Thiodiglykol oder 1,1,1-Trimethylolpropan.

Bevorzugte präpolymere Aufbaukomponenten zur Herstellung von Polyisocyanaten a1) sind hydroxyl-terminierte Polyester oder Polyether.

Weitere bevorzugte präpolymere Aufbaukomponenten zur Herstelung von Polyisocyanaten a1) sind Gemische von hydroxyl-terminiertem Polybutadien und hydroxyl-terminiertem Polyalkylenglykol, insbesondere Polybutylenglykol, oder hydroxyl-terminierte Polyalkylenglykole, insbesondere Polybutylenglykole, enthaltend aufgepfropfte 1-Olefine, insbesondere Styrol oder Acrylsäurederivate, wie Acrylsäureester oder Acrylnitril.

Ganz besonders bevorzugte präpolymere Aufbaukomponenten zur Herstellung von Polyisocyanaten a1) sind hydroxylterminierte Polyether, insbesondere hydroxyl-terminierte Polyalkylenglykole.

Kettenverlängerer zur Herstellung des präpolymeren Polyisocyanats a1) sind an sich bekannt. Beispiele dafür sind die weitere oben zur Herstellung der hydroxyl-terminierten Polyether erwähnten Diole und Polyole, insbesondere die Diole und Triole, insbesondere Trimethylolpropan, oder auch Diamine, wie Diaminoethan, 1,6-Diaminohexan, Piperazin, 2,5-Dimethylpiperazin, 1-Amino-3-aminomethyl-3,5,5-trimethylcyclohexan, 4,4′-Diaminocyclohexylmethan, 1,4-Diaminocyclohexan und 1,2-Propylendiamin oder auch Hydrazin, Aminosäurehydrazide, Hydrazide von Semicarbazidocarbonsäuren, Bis-hydrazide und Bis-semicarbazide.

Vorzugsweise verwendet man kurzkettige Diole oder Triole als Kettenverlängerungsmittel.

Das präpolymere Polyisocyanat a2) lässt sich in an sich bekannter Weise aus amino-terminierten Präpolymeren der Formel IIIb, insbesondere aus amino-terminierten Polyethern durch Umsetzung mit Phosgen oder mit Polyisocyanaten, bevorzugt mit Di- oder Triisocyanaten, besonders bevorzugt mit Diisocyanaten, erhalten. Die amino-terminierten Präpolymeren enthalten neben den Aminogruppen im allgemeinen keine weiteren Reste mit aktiven Wasserstoffatomen. Präpolymere mit terminalen Aminogruppen leiten sich im allgemeinen von den weiter oben als Aufbaukomponente für a1) beschriebenen hydroxyl-terminierten Kondensations- oder Additionspolymeren, insbesondere von Polyethern, ab.

Sie lassen sich erhalten, indem man besagte Kondensations- oder Additionspolymere enthaltend sekundäre Hydroxylgruppen mit Ammoniak umsetzt oder indem man besagte Kondensations- oder Additionspolymeren enthaltend primäre Hydroxylgruppen, beispielsweise Polybutylenglykol, mit Acrylnitril cyanoethyliert, und diese Produkte anschliessend hydriert.

Präpolymeres amino-terminiertes Poly-THF lässt sich auch gemäss S. Smith et al. in Macromol. Sci. Chem., A7(7), 1399-1413 (1973) durch Abbruch eines difunktionellen lebenden kationischen THF-Polymers mit Kaliumcyanat erhalten.

Als Polyisocyanat zur Herstellung der Komponenten a1) bzw. a2) verwendet man in der Regel aliphatische, cycloaliphatische, aromatische oder araliphatische Di-, Tri- oder Tetraisocyanate oder in solche Isocyanate überführbare Vorläufer.

Bevorzugt werden die aliphatischen, cycloaliphatischen oder araliphatischen Di- oder Triisocyanate, ganz besonders die aliphatischen oder cycloaliphatischen Diisocyanate.

Bei den bevorzugten aliphatischen Diisocyanaten handelt es sich in der Regel um geradkettige oder verzweigte $\alpha,\omega$-Diisocyanate. Die Alkylenketten können gegebenenfalls durch Sauerstoff- oder Schwefelatome unterbrochen sein und können gegebenenfalls ethylenisch ungesättigte Bindungen enthalten.

Bevorzugt werden $\alpha,\omega$-Diisocyanate mit geradkettigen, gesättigten $C_2$-$C_{20}$ Alkylenresten.

Beispiele für solche Reste sind Ethylen, Tri-, Tetra-, Penta-, Hexa-, Hepta-, Octa-, Deca-, Dodeca-, Tetradeca-, Hexadeca-, Octadeca- und Eicosamethylen.

Beispiele für bevorzugte, durch Heteroatome unterbrochene aliphatische α,ω-Diisocyanatreste sind $-(CH_2-CH_2-O)_o-CH_2-CH_2-$, $-[CH(CH_3)-CH_2-O]_o-CH(CH_3)-CH_2-$, $-(CH_2-CH_2-CH_2-CH_2-O)_o-CH_2-CH_2-CH_2-CH_2-$ und $-(CH_2-CH_2-S)_o-CH_2-CH_2-$, worin o 1 bis 20 beträgt.

Bei den bevorzugten cycloaliphatischen Diisocyanaten handelt es sich in der Regel um Derivate, die sich von gegebenenfalls substituierten Cyclopentanen, Cyclohexanen oder Cycloheptanen ableiten. Es können auch zwei solcher Ringe über ein Brückenglied miteinander verbunden sein.

Beispiele für solche Reste sind 1,3- und 1,4-Cyclohexylen oder Dodecahydrodiphenylmethan-4,4′-diyl.

Ferner kann man Di- oder Triisocyanate verwenden, die sich von Dimer-oder Trimerfettsäuren ableiten. Diese Verbindungen lassen sich in an sich bekannter Weise aus den Fettsäuren durch Umlagerung in das entsprechende Di- oder Triisocyanat erhalten (Curtius-, Lossen- oder Hoffmann-Umlagerungen).

Beispiele für bevorzugte aromatische Diisocyanate entsprechen den weiter oben für zweiwertige Phenolreste gegebenen Beispielen, bei denen die -OH-Gruppen durch -NCO-Gruppen ausgetauscht sind.

Beispiele für araliphatische Diisocyanatreste sind 1,2- und 1,4-Xylylen. Spezifische Beispiele für geeignete Polyisocyanate sind 2,4-Diisocyanatotoluol sowie dessen technische Gemische mit 2,6-Diisocyanatotoluol, 2,6-Diisocyanatotoluol, 1,5-Diisocyanatonaphthalin, 4,4′-Diisocyanatodiphenylmethan sowie techische Gemische verschiedener Diisocyanatodiphenylmethane (beispielsweise der 4,4′-und 2,4′-Isomeren), urethanisiertes 4,4′-Diisocyanatodiphenylmethan, carbodiimidisiertes 4,4′-Diisocyanatodiphenylmethan, des Uretdion des 2,4-Diisocyanatotoluols, Triisocyanatotriphenylmethan, das Addukt aus Diisocyanatotoluol und Trimethylolpropan, das Trimerisat aus Diisocyanatotoluol, Diisocyanato-m-xylylen, N,N′-Di-(4-methyl-3-isocyanatophenyl)-harnstoff, Mischtrimerisationsprodukte von Diisocyanatotoluol und 1,6-Diisocyanatohexamethylen, 1,6-Diisocyanatohexan, 3,5,5-Trimethyl-1-isocyanato-3-isocyanatomethylcyclohexan (Isophorondiisocyanat), N,N′,N‴-Tri-(6-iso cyanatohexyl)-biuret, 2,2,4-Trimethyl-1,6-diisocyanatohexan, 1-Methyl-2,4-diisocyanatocyclohexan, Dimeryldiisocyanat, 4,4′-Diisocyanatodicyclohexylmethan, trimeres Isophorondiisocyanat, trimeres Hexandiisocyanat und 2,6-Diisocyanatohexansäuremethylester.

Die Herstellung der Komponente a1) bzw. a2) erfolgt in an sich bekannter Weise durch Umsetzung der hydroxyl-, sulfhydryl- oder amino-terminierten Präpolymerkomponente mit einem Polyisocyanat oder einem Gemisch dieser Komponenten. Die Umsetzungen können gegebenenfalls in Gegenwart eines Kettenverlängerers, also einer monomeren di- oder polyfunktionellen Komponente vorgenommen werden.

Die Herstellung der Komponente a1) bzw. a2) erfolgt in Substanz oder in gegenüber Isocyanaten inerten Lösungsmitteln.

Beispiele für inerte Lösungsmittel sind Ester, wie Ethylacetat, Butylacetat, Methylglykolacetat oder Ethylglykolacetat; Ketone, wie Methylethylketon oder Methylisobutylketon; Aromaten, wie Toluol oder Xylol oder halogenierte Kohlenwasserstoffe, wie Trichlorethan oder Dichlormethan

Nimmt man eine bestimmte zusätzliche Kettenverlängerungsreaktion über Urethan- oder Harnstoffgruppen in Kauf oder ist diese sogar erwünscht, so setzt man die hydroxyl-, sulfhydryl- oder aminogruppenhaltigen Präpolymeren und die gegebenenfalls anwesenden Monomeren gegebenenfalls zunächst bei 0-25 °C und unter Kühlung und später gegebenenfalls über mehrere Stunden unter Erwärmung auf vorzugsweise 50-120 °C in einem NCO/OH-bzw. NCO/SH- bzw. $NCO/NH_2$-Verhältnis von 1,5-2,5, bevorzugt 1,8-2,2, mit dem Di- oder Polyisocyanat um.

Ist eine Kettenverlängerungsreaktion nicht erwünscht, so verwendet man in der Regel einen wesentlich grösseren Ueberschuss an Di- oder Polyisocyanat, beispielsweise ein NCO/OH-, NCO/SH- oder $NCO/NH_2$-Verhältnis von 3-5, und keinen Kettenverlängerer, und verfährt ansonsten wie bei niedrigen NCO/OH-, NCO/SH- oder $NCO/NH_2$-Verhältnissen beschrieben. Nach der Reaktion wird gegebenenfalls das überschüssige Di- oder Polyisocyanat entfernt, beispielsweise durch Dünnschichtdestillation oder durch Lösungsmittelextration.

Die Umsetzung der hydroxyl-, sulfhydryl- oder amino-terminierten Präpolymeren mit Polyisocyanaten wird in Gegenwart an sich bekannter Katalysatoren durchgeführt.

Beispiele dafür sind Diazabicyclooctan, Dibutylzinndilaurat oder Zinn-II-octoat. Diese Katalysatoren werden in den üblichen Mengen eingesetzt, beispielsweise in Mengen von 0,001-2 Gew.-%, bezogen auf die Menge an Polyisocyanat.

Die Reaktion der Komponenten a1) oder a2) (Polyisocyanat IIa) mit dem Phenol oder Aminophenol IIIa erfolgt in Analogie zur oben beschriebenen Umsetzung der hydroxyl-, sulfhydryl- oder amino-terminierten Aufbaukomponente mit dem Polyisocyanat.

Das Polyphenol oder Aminophenol IIIa wird dabei bevorzugt in einer solchen Menge vorgelegt, dass die freien NCO-Gruppen im wesentlichen durch die Reaktion verbraucht werden, und dass pro Polyphenol oder Aminophenol vorwiegend eine -OH bzw. $-NH_2$ Gruppe reagiert.

Dies wird in der Regel dann der Fall sein, wenn auf 1 Mol freie Isocyanatgruppen etwa zwei bzw. drei Mol OH-Gruppen des Bis-oder Trisphenols oder etwa ein Mol $NH_2$-Gruppen des Aminophenols vorgelegt werden. Im Falle der Polyphenole IIIa beträgt das Verhältnis von OH:NCO im allgemeinen 1,5:1,0 bis 3,0:1,0, vorzugsweise 1,8:1,0 bis 2,5:1,0. Im Falle der Aminophenole IIIa beträgt das Verhältnis von $NH_2$:NCO im allgemeinen 0,8:1,0 bis 1,2:1,0, bevorzugt 0,8:1,0 bis 1,0:1,0. Natürlich können auch Ueberschussmengen der Komponente IIIa eingesetzt werden, wobei Kettenverlängerung über das Phenol eintreten kann; doch sollte das Endprodukt in der Regel nicht mehr als 50 Gew.-%, bevorzugt weniger als 10 Gew.-% bezogen auf die Gesamtmischung an unreagierter Komponente IIIa aufweisen.

Im Fall der Aminophenole IIIa ist im allgemeinen eine stöchiometrische Menge erwünscht.

Zur Verkappung des Polyisocyanats IIa können auch Gemische aus Phenol und/oder Aminophenol IIIa eingesetzt werden. Diese Gemische können ferner geringe Anteile an Monophenolen enthalten. Bei dieser Variante wird der Monophenolanteil so gewählt, dass das Reaktionsprodukte hauptsächlich aus Verbindungen der Formel I mit freien phenolischen OH-Gruppen besteht.

Bei den amino-terminierten Präpolymeren IIb in Verfahren b) und c) handelt es sich in der Regel um die präpolymeren Polyamine, die bereits in Verfahren a) beschrieben wurden, und die dort zur Herstellung der präpolymeren Polyisocyanatkomponenten IIa eingesetzt wurden. Bevorzugte Verbindungen IIb sind amino-terminierte Polyether, wie oben definiert.

Die Urethane IIIb leiten sich von Aminophenolen $HR^2N\text{-}R^3\text{-}(OH)_m$ ab, worin $R^2$, $R^3$ und m die oben definierte Bedeutung besitzen. Zur Herstellung von Urethanen IIIb verkappt man diese Aminophenole in an sich bekannter Weise mit $R^{11}$-O-CO-Cl. Dabei besitzt $R^{11}$ die weiter oben definierte Bedeutung. Die Umsetzung der Komponenten IIb und IIIb (Verfahren b) erfolgt im allgemeinen durch Vorgabe eines stöchiometrischen Verhältnisses beider Komponenten oder eines geringen Ueberschusses an Komponente IIIb und durch Erhitzen des Gemisches, so dass praktisch alle freien Aminogruppen von IIb verkappt werden.

Die Reaktion wird bevorzugt in einem inerten Lösungsmittel ausgeführt. Beispiele dafür sind weiter oben aufgelistet.

Die cyclischen Carbonate oder Urethane IIIc leiten sich von ortho- oder peri-Bisphenolen bzw. Aminophenolen der Formel $HO\text{-}R^{12}\text{-}OH$ bzw. $HR^2N\text{-}R^{12}\text{-}OH$ ab. Dabei besitzen $R^2$ und $R^{12}$ die weiter oben definierte Bedeutung. Die Verbindungen IIIc lassen sich daraus durch Umsetzung mit Phosgen erhalten. Die Umsetzung der Komponenten IIb und IIIc (Verfahren c) erfolgt im allgemeinen durch Vorgabe eines stöchiometrischen Verhältnisses beider Komponenten oder eines geringen Ueberschusses an Komponente IIIc. Ansonsten wird die Reaktion wie bei Verfahren a) beschrieben durchgeführt. Das Molekulargewicht (Zahlenmittel) der erfindungsgemässen Polyurethane oder Polyharnstoffe liegt üblicherweise im Bereich von 500-20000, vorzugsweise 500-3000.

Die Viskosität dieser Verbindungen beträgt in der Regel weniger als 150000 mPas, vorzugsweise weniger als 100000 mPas (gemessen bei 80 °C mit dem Epprecht-Viskosimeter).

Die Strukturen der phenol-terminierten Polyurethane oder Polyharnstoffe der Formel I, welche sich von der Umsetzung gemäss Verfahren a), b) oder c) ableiten, werden sich, je nach der Funktionalität des Präpolymerrestes $R^1$, unterscheiden.

In Verfahren a) wird diese Funktionalität beispielsweise durch die Funktionalität der hydroxyl-, sulfhydryl- oder amino-terminierten Präpolymeren, durch gegebenenfalls eingesetzte Kettenverlängerer, die Funktionalität des zur Herstellung von IIa verwendeten Isocyanats und die Mengenverhältnisse der einzelnen Reaktanden bestimmt.

Bevorzugt werden Verbindungen der Formel I, worin X -O- ist.

Ebenfalls bevorzugt werden Verbindungen der Formel I, die im wesentlichen frei von Isocyanatgruppen sind und wenigstens zwei freie phenolische Hydroxylgruppen aufweisen und die erhältlich sind durch Umsetzung von

a) einem präpolymeren Polyisocyanat, welches

a1) ein Addukt eines Polyisocyanats an eine präpolymere Polyhydroxyl-oder Polysulfhydrylverbindung oder an ein Gemisch solcher Verbindungen gegebenenfalls in Kombination mit einem Kettenverlängerer ist, oder

a2) sich ableitet von einem präpolymeren Polyetheramin, mit

b) mindestens einem Phenol mit zwei oder drei phenolischen Hydroxylgruppen oder mit einem Aminophenol mit eine oder zwei phenolischen Hydroxylgruppen.

Besonders bevorzugte Verbindungen der Formel I leiten sich von präpolymeren Polyisocyanaten a) ab, die eine mittlere Isocyanatfunktionalität von 2 bis 3 besitzen.

Besonders bevorzugt werden Verbindungen der Formel I, worin Komponente a1) ein Addukt eines Polyisocyanats an ein hydroxyl-terminiertes Präpolymeres mit einem mittleren Molekulargewicht von 150

bis 10000 ist.

Ganz besonders bevorzugt werden Verbindungen der Formel I, worin die Aufbaukomponente zur Herstellung von Komponente a1) ein hydroxylterminierter Polyether oder Polyester ist.

Diese Aufbaukomponente zur Herstellung von Komponente a1) wird vorzugsweise in Kombination mit Kettenverlängern eingesetzt.

Ganz besonders bevorzugt werden Verbindungen der Formel I, worin das Polyisocyanat zur Herstellung von Komponente a1) ein aliphatisches, cycloaliphatisches, aromatisches oder araliphatisches Di- oder Triisocyanat ist.

In einer bevorzugten Ausführungsform arbeitet man bei der Herstellung der Komponente a1) mit einem hydroxyl-terminierten Polyether oder Polyester in Abwesenheit eines Kettenverlängerers und mit einer dem OH-Gehalt aequivalenten oder überschüssigen Menge an Polyisocyanat und erhält nach der Umsetzung mit dem Polyphenol oder Aminophenol IIIa Verbindungen der Formel V

$$\left[\left\{\left(HO\right)_{m} R^{3}-Y-\overset{O}{\overset{\|}{C}}-NH\right\}_{r} R^{13}-NH-\overset{O}{\overset{\|}{C}}-O\right]_{n} R^{14} \qquad (V),$$

worin $R^3$, m und n die oben definierte Bedeutung besitzen, r eine ganze Zahl zwischen 1 und 3 ist, Y -O- oder -NH- bedeutet, $R^{13}$ der r+1-wertige Rest eines aliphatischen, cycloaliphatischen, aromatischen oder araliphatischen Polyisocyanats nach dem Entfernen der Isocyanatgruppen ist, $R^{14}$ ein n-wertiger hydroxylterminierter Polyester- oder Polyetherrest nach dem Entfernen der endständigen OH-Gruppen ist, mit der Massgabe, dass der Index m und die Reste $R^3$ und $R^{13}$ innerhalb eines gegebenen Moleküls unterschiedlich sein können.

Bevorzugt werden solche Verbindungen der Formel V.

Der Index m ist vorzugsweise 1. Der Index n ist vorzugsweise 2 oder 3, ganz besonders bevorzugt 2. Der Index r ist vorzugsweise 1.

Bevorzugt werden Verbindungen der Formel V, worin m 1 ist, n 2 oder 3 bedeutet, r 1 ist, Y -O- ist, $R^{13}$ sich ableitet von einem aliphatischen, cycloaliphatischen oder aromatischen Diisocyanat und $R^{14}$ ein zwei- oder dreiwertiger Rest eines hydroxyl-terminierten Polyesters oder Polyethers mit einem Molekulargewicht von 150 bis 10000 nach dem Entfernen der endständigen Hydroxylgruppen ist.

Ganz besonders bevorzugt werden Verbindungen der Formel V, worin m 1 ist, n 2 oder 3 bedeutet, r 1 ist, Y -O- ist, $R^{13}$ sich ableitet von einem aliphatischen oder cycloaliphatischen Diisocyanat und $R^{14}$ ein zwei- oder dreiwertiger Rest eines Polyalkylenetherpolyols mit einem Molekulargewicht von 150 bis 3000 nach dem Entfernen der endständigen Hydroxylgruppen ist.

Zu den besonders bevorzugten Verbindungen dieses zuletzt definierten Typs zählen diejenigen, worin n 2 bedeutet und $R^{14}$ ein Strukturelement der Formel VI ist

$$-(C_sH_{2s}-O)_x-C_sH_{2s}- \qquad (VI)$$

worin s 3 oder 4 bedeutet, x eine ganze Zahl von 5 bis 40 ist und die Einheiten $-C_sH_{2s}-O-$ innerhalb eines gegebenen Strukturelementes der Formel VI im Rahmen der gegebenen Definitionen unterschiedlich sein können.

Beispiele für Strukturelemente der Formel VI sind $-(CH_2-CH(CH_3)-O)_x-CH_2-CH(CH_3)-$, $-(CH_2-CH_2-CH_2-CH_2-O)_x-CH_2-CH_2-CH_2-CH_2-$sowie Copolymere enthaltend diese Strukturlemente.

Besonders bevorzugt werden Verbindungen der Formel V, worin $R^3$ sich von einem Bisphenol der Formel IV ableitet.

Zu den ebenfalls bevorzugten Polyurethanen oder Polyharnstoffen dieser Erfindung zählen Verbindungen, die erhältlich sind durch Umsetzung von

a) einem Addukt einer im wesentlichen äquivalenten Menge eines Diisocyanates mit einem Gemisch aus einem di- oder tri-hydroxyl-terminierten Polyether oder Polyester und weniger als 1 Mol-%, bezogen auf das hydroxyl-terminierte Präpolymere, eines kurzkettigen Diols oder Triols und

b) einer dem NCO-Gehalt im wesentlichen äquivalenten Menge eines Bisphenols oder Trisphenols.

In einer weiteren bevorzugten Ausführungsform arbeitet man bei der Herstellung der Komponente a2) mit einem amino-terminierten Polyalkylenether, setzt diesen in Abwesenheit eines Kettenverlängerers mit einer dem $NH_2$-Gehalt äquivalenten oder überschüssigen Menge an Diisocyanat oder mit Phosgen um und erhält nach der Umsetzung mit dem Polyphenol oder Aminophenol IIIa eine Verbindung der Formel VII

$$\left[(HO-)_{m}R^{3}-Y-(-\overset{O}{\overset{\|}{C}}-NH-R^{15}-)_{t}\overset{O}{\overset{\|}{C}}-NH-\right]_{n}R^{16} \qquad (VII),$$

worin $R^3$, m und n die oben definierte Bedeutung besitzen, Y -O- oder -NH-ist, t 0 oder 1 ist, $R^{15}$ der zweiwertige Rest eines aliphatischen, cycloaliphatischen, aromatischen oder araliphatischen Diisocyanats nach dem Entfernen der Isocyanatgruppen ist und $R^{16}$ der n-wertige Rest eines amino-terminierten Polyalkylenethers nach dem Entfernen der endständigen $NH_2$-Gruppen ist.

Verbindungen der Formel VII werden bevorzugt.

Besonders bevorzugt werden Verbindungen der Formel VII, worin m 1 ist, n 2 oder 3 bedeutet, Y -O- ist, $R^{15}$ sich ableitet von einem aliphatischen, cycloaliphatischen oder aromatischen Diisocyanat und $R^{16}$ ein zwei- oder dreiwertiger Rest eines amino-terminierten Polyalkylenethers mit einem Molekulargewicht von 150 bis 10000 nach dem Entfernen der endständigen Aminogruppen ist.

Ganz besonders bevorzugt werden Verbindungen der Formel VII, worin m 1 ist, n 2 bedeutet, t 0 ist, Y -O- bedeutet und $R^{16}$ sich ableitet von einem zweiwertigen amino-terminierten Polyalkylenether mit einem Molekulargewicht von 150 bis 6000.

Ganz besonders bevorzugt werden Verbindungen der Formel VII, worin m und t 1 sind, n 2 bedeutet, $R^{15}$ der zweiwertige Rest eines aliphatischen oder cycloaliphatischen Diisocyanats nach dem Entfernen der Isocyanatgruppen ist und $R^{16}$ sich ableitet von einem zweiwertigen amino-terminierten Polyalkylenether mit einem Molekulargewicht von 150 bis 6000.

Zu den besonders bevorzugten Verbindungen dieser beiden zuletzt definierten Typen zählen diejenigen, worin $R^{16}$ ein Strukturelement der Formeln VIII, IX, X, XI oder XII ist

$$-\underset{CH_3}{CH}-CH_2-(-O-CH_2-\underset{CH_3}{CH}-)_y \quad (VIII), \qquad R^{17}-\left[-O-(CH_2-\underset{CH_3}{CH}-O-)_y CH_2-\underset{CH_3}{CH}-\right]_2 \quad (IX),$$

$$R^{18}-\left[-O-(CH_2-\underset{CH_3}{CH}-O)_y-CH_2-\underset{CH_3}{CH}-\right]_3 \quad (X), \qquad -(-CH_2-)_4-\left[O-(-CH_2-)_4-\right]_z \quad (XI),$$

$$CO-\left[-NH(-\underset{CH_3}{CH}-CH_2-O)_y-R^{17}-(-O-CH_2-\underset{CH_3}{CH})_y-\right] \quad (XII),$$

worin y 5 bis 90, insbesondere 10 bis 70 ist, z 10 bis 40 ist, $R^{17}$ ein Rest eines aliphatischen Diols nach dem Entfernen der beiden OH-Gruppen ist und $R^{18}$ ein Rest eines aliphatischen Triols nach dem Entfernen der drei OH-Gruppen ist.

Die Verbindungen der Formel I lassen sich zusammen mit Epoxidharzen als härtbare Gemische einsetzen.

Durch die freie phenolische Hydroxylgruppe wird eine Härterfunktion bereitgestellt. Selbstverständlich können diese härtbaren Gemische noch weitere Härter, die in der Technik der Epoxidharze üblich sind, enthalten.

Die Erfindung betrifft also auch Zusammensetzungen enthaltend i) eine Epoxidverbindung mit wenigstens zwei 1,2-Epoxidgruppen pro Molekül und ii) eine Verbindung der Formel I, wie oben definiert.

Als Komponente i) kann im Prinzip jede in der Technik der Epoxidharze übliche Verbindung eingesetzt werden. Man kann auch Gemische von Epoxidharzen einsetzen.

Beispiele für Epoxidharze sind:

I) Polyglycidyl- und Poly-($\beta$-methylglycidyl)-ester erhältlich durch Umsetzung einer Verbindung mit mindestens zwei Carboxylgruppen im Molekül und Epichlorhydrin bzw. Glyzerindichlorhydrin bzw. $\beta$-Methyl-epichlorhydrin. Die Umsetzung erfolgt zweckmässig in der Gegenwart von Basen.

Als Verbindung mit mindestens zwei Carboxylgruppen im Molekül können aliphatische Polycarbonsäuren verwendet werden. Beispiele für diese Polycarbonsäuren sind Oxalsäure, Bernsteinsäure, Glutarsäure, Adipinsäure, Pimelinsäure, Korksäure, Azelainsäure, Sebazinsäure oder dimerisierte bzw. trimerisierte Linolsäure.

Es können aber auch cycloaliphatische Polycarbonsäuren eingesetzt werden, wie beispielsweise Tetrahydrophthalsäure, 4-Methyltetrahydrophthalsäure, Hexahydrophthalsäure oder 4-Methylhexahydrophthalsäure.
Weiterhin können aromatische Polycarbonsäuren Verwendung finden, wie beispielsweise Phthalsäure, Isophthalsäure oder Terephthalsäure.

II) Polyglycidyl- oder Poly-($\beta$-methylglycidyl)-ether erhältlich durch Umsetzung einer Verbindung mit mindestens zwei freien alkoholischen Hydroxygruppen und/oder phenolischen Hydroxygruppen und einem geeignet substituierten Epichlorhydrin unter alkalischen Bedingungen, oder in Anwesenheit eines sauren Katalysators und anschliessender Alkalibehandlung.
Ether dieses Typs leiten sich beispielsweise ab von acyclischen Alkoholen, wie Ethylenglykol, Diethylenglycol und höheren Poly-(oxyethylen)-glykolen, Propan-1,2-diol oder Poly-(oxypropylen)-glykolen, Propan-1,3-diol, Butan-1,4-diol, Poly-(oxytetramethylen)-glykolen, Pentan-1,5-diol, Hexane-1,6-diol, Hexan-2,4,6-triol, Glycerin, 1,1,1-Trimethylolpropan, Pentaerythrit, Sorbit, sowie von Polyepichlorhydrinen.
Sie leiten sich aber auch beispielsweise ab von cycloaliphatischen Alkoholen wie 1,3- oder 1,4-Dihydroxycyclohexan, Bis-(4-hydroxycyclohexyl)-methan, 2,2-Bis(4-hydroxycyclohexyl)-propan oder 1,1-Bis-(hydroxymethyl)-cyclohex-3-en oder sie besitzen aromatische Kerne wie N,N-Bis-(2-hydroxyethyl)-anilin oder p,p′-Bis-(2-hydroxyethylamino)-diphenylmethan.
Die Epoxidverbindungen können sich auch von einkernigen Phenolen ableiten, wie beispielsweise von Resorcin oder Hydrochinon; oder sie basieren auf mehrkernigen Phenolen wie beispielsweise Bis-(4-hydroxy phenyl)-methan, 4,4′-Dihydroxydiphenyl, Bis-(4-hydroxyphenyl)-sulfon, 1,1,2,2-Tetrakis-(4-hydroxyphenyl)-ethan, 2,2-Bis-(4-hydroxyphenyl)-propan, 2,2-Bis-(3,5-dibrom-4-hydroxyphenyl)-propan sowie auf Novolaken erhältlich durch Kondensation von Aldehyden, wie beispielsweise Formaldehyd, Acetaldehyd, Chloral oder Furfuraldehyd mit Phenolen wie Phenol, oder mit Phenolen, die im Kern mit Chloratomen oder $C_1$-$C_9$Alkylgruppen substituiert sind, wie beispielsweise 4-Chlorphenol, 2-Methylphenol oder 4-tert.Butylphenol oder erhältlich durch Kondensation mit Bisphenolen, so wie oben beschrieben. Für flexible Massen sind glycidylisierte Novolake des Cashewnutöls von besonderer Bedeutung.

III) Poly-(N-glycidyl) Verbindungen erhältlich durch Dehydrochlorierung der Reaktionsprodukte von Epichlorhydrin mit Aminen, die mindestens zwei Aminowasserstoffatome enthalten. Bei diesen Aminen handelt es sich zum Beispiel um Anilin, n-Butylamin, Bis-(4-aminophenyl)-methan, m-Xylylendiamin oder Bis-(4-methylaminophenyl)-methan.
Zu den Poly-(N-glycidyl) Verbindungen zählen aber auch Triglycidylisocyanurat, N,N′-Diglycidylderivate von Cycloalkylenharnstoffen, wie Ethylenharnstoff oder 1,3-Propylenharnstoff, und N,N′-Diglycidylderivate von Hydantoinen, wie von 5,5-Dimethylhydantoin.

IV) Poly-(S-glycidyl) Verbindungen, beispielsweise Di-S-glycidylderivate, die sich von Dithiolen, wie beispielsweise Ethan-1,2-dithiol oder Bis-(4-merkaptomethylphenyl)-ether ableiten.

V) Cycloaliphatischen Epoxidharze, beispielsweise Bis-(2,3-epoxicyclopentyl)-ether, 2,3-Epoxicyclopentylglycidylether, 1,2-Bis-(2,3-epoxicyclopentyloxy)-ethan oder 3,4′-Epoxicyclohexylmethyl-3′,4′-epoxicyclohexancarboxylat.

Es lassen sich aber auch Epoxidharze verwenden, bei denen die 1,2-Epoxidgruppen an unterschiedliche Heteroatome bzw. funktionelle Gruppen gebunden sind; zu diesen Verbindungen zählen beispielsweise das N,N,O-Triglycidylderivat des 4-Aminophenols, der Glycidylether-Glycidylester der Salicylsäure, N-Glycidyl-N′-(2-glycidyloxypropyl)-5,5-dimethylhydantoin oder 2-Glycidyloxy-1,3-bis-(5,5-dimethyl-1-glycidylhydantoin-3-yl)-propan.

Besonders bevorzugt als Epoxidharze werden Polyglycidylether von Bisphenolen, wie beispielsweise von 2,2-Bis-(4-hydroxyphenyl)-propan oder Bis-(4-hydroxyphenyl)-methan, von Novolaken, die durch Umsetzung von Formaldehyd mit einem Phenol gebildet werden, oder von den oben erwähnten aliphatischen Diolen, insbesondere von Butan-1,4-diol, sowie Addukte von Bisphenol A und glycidylisierten aliphatischen Diolen.

Die Mengen der Epoxidverbindung i) und des Polyurethans oder Polyharnstoffs ii) der erfindungsgemässen Zusammensetzungen werden vorzugsweise so gewählt, dass das Verhältnis der Hydroxyläquivalente des Polyurethans oder Polyharnstoffs ii) zu den Epoxidäquivalenten des Epoxidharzes i) zwischen 0,05 und 1,0, vorzugsweise 0,1 und 0,8, liegt.

Wünscht man gehärtete Produkte mit hoher Festigkeit, so setzt man im allgemeinen weniger als 50 Gew.-% der Komponente ii), bezogen auf die Mischung aus i) und ii) ein. Vorzugsweise verwendet man dabei 1-50 Gew.-%, besonders 5-25 Gew.-%, an Komponente ii).

Wünscht man gehärtete Produkte mit einer hohen Flexibilität, so setzt man im allgemeinen 40-80 Gew.-% der Komponente ii), bezogen auf i) und ii), ein.

Natürlich wird die Flexibilität des gehärteten Produktes auch von den Eigenschaften der Einzelkomponenten i) und ii) mitbestimmt.

Bevorzugte flexible Produkte sind solche, worin die Glasübergangstermperaturen der flexiblen Phase kleiner als 0° C, vorzugsweise kleiner als -20° C sind.

Solche Systeme können homogen oder heterogen sein.

Die Zusammensetzung aus i) und ii) kann auch in Form eines schmelzbaren aber noch härtbaren Adduktes eingesetzt werden.

Die Herstellung solcher schmelzbaren aber noch härtbaren Addukte erfolgt in an sich bekannter Weise durch Erhitzen des Epoxidharzes i) und des phenol-terminierten Polyurethans oder Polyharnstoffs ii) gegebenenfalls in Gegenwart eines Katalysators, so dass ein schmelzbares aber noch härtbares Vorkondensat entsteht.

Vorzugsweise verwendet man dabei 20-50 Gew-% der Komponente ii), bezogen auf die Menge an i) und ii).

Als Katalysator verwendet man beispielsweise Triphenylphosphin, tertiäre Amine, quaternäre Ammonium- oder Phosphoniumsalze oder Chrom-Acetylacetonat.

Die Erfindung betrifft auch diese Addukte.

Selbstverständlich können die erfindungsgemässen härtbaren Zusammensetzungen auch noch zusätzliche dem Fachmann bekannte Härter iii) enthalten, wie z.B. aliphatische, cycloaliphatische, aromatische und heterocyclische Amine, wie Bis-(4-aminophenyl)-methan, Anilin-Formaldehyd-Harze, Bis-(4-aminophenyl)-sulfon, Propan-1,3-diamin, Hexamethylendiamin, Diethylentriamin, Triethylentetramin, 2,2,4-Trimethylhexan-1,6-diamin, m-Xylylendiamin, Bis-(4-aminocyclohexyl)methan, 2,2-Bis-(4-aminocyclohexyl)-propan und 3-Aminomethyl-3,5,5-trimethylcyclohexylamin (Isophorondiamin); Polyaminoamide, wie beispielsweise solche aus aliphatischen Polyaminen und dimerisierten oder trimerisierten Fettsäuren; Polyphenole, wie Resorcin, Hydrochinon, 2,2-Bis(4-hydroxyphenyl)propan (Bisphenol A) und Phenol-Aldehyd-Harze; Polythiole, wie die im Handel unter der Bezeichnung "Thiokole®" erhältlichen Polythiole; Polycarbonsäuren und ihre Anhydride, wie z.B. Phthalsäureanhydrid, Tetrahydrophthalsäureanhydrid, Hexanhydrophthalsäureanhydrid, Hexachlorendomethylentetrahydrophthalsäureanhydrid, Pyromellitsäureanhydrid, Benzophenon-3,3′,4,4′-tetracarbonsäuredianhydrid, die Säuren der zuvorgenannten Anhydride sowie auch Isophthalsäure und Terephthalsäure. Es können auch katalytisch wirkende Härtungsmittel verwendet werden, wie beispielsweise tertiäre Amine [z.B. 2,4,6-Tris-(dimethylaminoethyl)-phenol]; Imidazole oder Mannichbasen; Alkalimetallalkoholate (z.B. Na-Alkoholat von 2,4-Dihydroxy-3-hydroxymethylpentan); Zinnsalze von Alkansäuren (z.B. Zinnoctanoat); Friedel-Crafts-Katalysatoren, wie Bortrifluorid und Bortrichlorid und ihre Komplexe und Chelate, die durch Umsetzung von Bortrifluorid mit z.B. 1,3-Diketonen erhalten werden; sowie Amidine, insbesondere Dicyandiamid.

Zusätzlich zu diesen Härtern können noch Beschleuniger iv) eingesetzt werden.

Beispiele für Beschleuniger iv) sind tertiäre Amine, deren Salze oder quaternäre Ammoniumverbindungen, wie Benzyldimethylamin, 2,4,6-Tris-(dimethylaminomethyl)phenol, 1-Methylimidazol, 2-Ethyl-4-methylimidazol, 4-Aminopyridin, Tripentylammoniumphenolat oder Tetramethylammoniumchlorid; oder Alkalimetallalkoholate, wie Na-Alkoholate von 2,4-Dihydroxy-3-hydroxymethylpentan; oder substituierte Harnstoffe, wie N-(4-Chlorphenyl)-N,N′-dimethylharnstoff oder N-(3-Chlor-4-methylphenyl)-N′N′-dimethylharnstoff (Chlortoluron).

Bevorzugt werden heisshärtbare Systeme, worin Komponenten i) und ii) in Kombination mit primären und/oder sekundären aromatischen Aminen oder mit Amidinen als Härter iii) eingesetzt werden.

Die Menge an Härter iii) bzw. an Beschleuniger iv) ist abhängig vom Härtertyp und wird vom Fachmann in an sich bekannter Weise ausgewählt. Bevorzugter Härter ist Dicyandiamid. In diesem Fall setzt man auf ein Mol Epoxidgruppen vorzugsweise 0,1-0,5 Mol des Härters ein.

Die Härtung kann je nach Härter bei tieferen oder bei höheren Temperaturen vorgenommen werden. Im allgemeinen liegen die Härtungstemperaturen bei der Heisshärtung zwischen 80 und 250° C, bevorzugt zwischen 100 und 180° C. Die Härtung kann gewünschtenfalls auch in zwei Stufen vorgenommen werden, indem man z.B. den Härtungsvorgang unterbricht oder, falls man ein Härtungsmittel für höhere Temperaturen einsetzt, die härtbare Mischung bei tieferen Temperaturen teilweise härten lässt. Die dabei erhaltenen Produkte sind noch schmelzbare und lösliche Präkondensate (sogenannte "B-Stufenharze") und eignen sich z.B. für Pressmassen, Sinterpulver oder Prepregs.

Gewünschtenfalls kann man den härtbaren Gemischen zur weiteren Herabsetzung der Viskosität reaktive Verdünner, wie z.B. Styroloxid, Butylglycidylether, 2,2,4-Trimethylpentylglycidylether, Phenylglycidylether, Kresylglycidylether oder Glycidylester von synthetischen, hochverzweigten, in der Hauptsache tertiären aliphatischen Monocarbonsäuren, zusetzen.

Als weitere übliche Zusätze können die erfindungsgemässen Gemische ferner Weichmacher, Streck-, Füll- und Verstärkungsmittel, wie beispielsweise Steinkohlenteer, Bitumen, Textilfasern, Glasfasern, Asbestfasern, Borfasern, Kohlenstoff-Fasern, mineralische Silikate, Glimmer, Quarzmehl, Aluminiumoxidhydrat, Bentonite,

Kaolin, Wollastonit, Kieselsäureaerogel oder Metallpulver, z.B. Aluminiumpulver oder Eisenpulver, ferner Pigmente und Farbstoffe, wie Russ, Oxidfarben und Titandioxid, Flammschutzmittel, Thixotropiemittel, Verlaufmittel ("flow control agents"), wie Silicone, Wachse und Stearate, die zum Teil auch als Formtrennmittel Anwendung finden, Haftvermittler, Antioxidantien und Lichtschutzmittel enthalten.

Die erfindungsgemässen Gemische lassen sich beispielsweise als Klebstoffe, Klebefilme, Matrixharze, Lacke, Dichtungsmassen, Patches oder ganz allgemein zur Herstellung von gehärteten Produkten verwenden. Sie können in jeweils dem speziellen Anwendungsgebiet angepasster Formulierung, in ungefülltem oder gefülltem Zustand, z.B. als Anstrichmittel, Beschichtungsmassen, Lacke, Pressmassen, Tauchharze, Giessharze, Imprägnierharze, Laminierharze, Matrixharze und Klebemittel verwendet werden.

Die Erfindung betrifft auch die Verwendung der erfindungsgemässen Gemische für die oben erwähnten Zwecke, sowie die gehärteten Produkte.

Die folgenden Beispiele erläutern die Erfindung.

## A. Herstellung der Verbindungen

### Beispiel 1:

Unter Stickstoff legt man in einem trockenen Planschliffkolben 100 g Methylendiphenyldiisocyanat vor und gibt bei 80 °C 354 g Polypropylenglykol ($M_w$ = 2000), das durch zweistündiges Erhitzen bei 100 °C und 1,33 Pa Druck getrocknet wurde, sowie 1,8 g Trimethylolpropan und 0,1 ml Dibutylzinndilaurat innerhalb von 15 Minuten zu und rührt 2 Stunden bei 80 °C. Dann gibt man 135 g 3,3′-Diallyl-Bisphenol A, welches 2 Stunden bei 100 °C und 1,33 Pa Druck getrocknet wurde, zu und rührt 2 Stunden bei 80 °C und 45 Minuten bei 120 °C bis kein freies Isocyanat mehr nachweisbar ist. Man erhält ein viskoses Harz mit den folgenden Analysendaten:

Viskosität $\eta_{80}$ = 112600 mPas;
Phenolgehalt: 2,7 Val/kg;
Molekulargewicht (GPC): $M_n$ = 2350, $M_w/M_n$ = 8,6.

### Beispiel 2:

Unter Stickstoff gibt man zu 54,4 g Hexamethylendiisocyanat bei 100 °C 354 g trockenes Polypropylenglykol ($M_w$ = 2000), 1,8 g Trimethylolpropan und 0,1 ml Dibutylzinndilaurat. Nachdem man zwei Stunden bei 100 °C gerührt hat und der Isocyanatgehalt unter 4 % abgesunken ist, lässt man dieses Präpolymer bei 80 °C in 135 g trockenes 3,3′-Diallylbisphenol A fliessen und rührt 2,5 Stunden bei 80 °C und 30 Minuten bei 100 °C bis kein freies Isocyanat mehr nachweisbar ist. Man erhält ein viskoses Harz mit den folgenden Analysedaten:

Viskosität $\eta_{40}$ = 128600 mPas;
Phenolgehalt: 2,5 Val/kg;
Molekulargewicht (GPC): $M_n$ = 1260, $M_w/M_n$ = 11,4.

### Beispiel 3:

Unter Stickstoff legt man in einem trockenen Planschliffkolben 84 g Hexamethylendiioscyanat vor und gibt innerhalb einer Stunde bei 85 °C 500 g trockenes Polypropylenglykol ($M_w$ 2000) zu, rührt 2 Stunden bei 100 °C und 1 Stunde bei 135 °C bis ein Isocyanatgehalt von 3,2 % erreicht ist. Dieses Präpolymer gibt man bei 100 °C zu einer Mischung aus 155 g 3,3′-Diallylbisphenol A und 0,1 ml Dibutylzinndilaurat. Nach 3 Stunden Rühren bei 100 °C kann kein freies Isocyanat mehr nachgewiesen werden und man erhält 500 g eines viskosen Harzes mit den folgenden Analysedaten:

Viskosität $\eta_{40}$ = 390000 mPas;
Phenolgehalt: 1,4 Val/kg;
Molekulargewicht (GPC): $M_n$ = 2285, $M_w/M_n$ = 24.

Beispiel 4:

Unter Stickstoff legt man in einem trockenen Planschliffkolben 67,2 g Hexamethylendiisocyanat vor und gibt innerhalb von 15 Minuten bei 85° C 354 g trockenes Polypropylenglykol ($M_w$ = 2000), 1,8 g Trimethylolpropan und 0,1 ml Dibutylzinndilaurat zu und rührt 2 Stunden bei 100° C. Dieses Präpolymer gibt man bei 100° C zu 135 g trockenem 3,3′-Diallylbisphenol A und rührt 5 Stunden bei 100° C und 2 Stunden bei 130° C. Es wird ein viskoses Harz erhalten mit den folgenden Analysedaten:
Viskosität $\eta_{40}$ = 133000 mPas;
Molekulargewicht (GPC): $M_n$ = 1420, $M_w/M_n$ = 11,5;
Phenolgehalt: 1,6 Val/kg.

Beispiel 5:

Unter Stickstoff legt man in einem trockenen Planschliffkolben 40,8 g Hexamethylendiioscyanat vor und gibt bei 100° C 265,5 g trockenes Polybutylenglykol ($M_w$ = 2000), 1,35 g Trimethylolpropan und 0,1 ml Dibutylzinndilaurat zu und rührt 2 Stunden bei 100° C. Das erhaltene Präpolymer wird bei 80° C zu 101,3 g trockenem 3,3′-Diallylbisphenol A gegeben und 4 Stunden bei 100° C und 3 Stunden bei 110° gerührt bis kein freies Isocyanat mehr nachweisbar ist. Man erhält ein viskoses Harz mit den folgenden Analysedaten:
Viskosität $\eta_{80}$ = 56000 mPas;
Molekulargewicht (GPC): $M_n$ = 1250, $M_w/M_n$ = 17;
Phenolgehalt: 1,55 Val/kg.

Beispiel 6:

Unter Stickstoff legt man in einem trockenen Planschliffkolben 54,4 g Hexamethylendiioscyanat vor, gibt bei 100° C nacheinander 354 g trockenes Polypropylenglykol ($M_w$ = 2000), 1,8 g Trimethylolpropan, 0,1 ml Dibutylzinndilaurat und rührt 2 Stunden bei 100° C bis ein Isocyanatgehalt von 3,5 % erreicht ist. Dieses Präpolymer gibt man zu einer Lösung von 100 g Bisphenol A in 300 ml trockenem Dioxan und kocht 5 Stunden am Rückfluss. Dann wird das Dioxan bei 100° C/1,33 Pa abgezogen und man erhält ein viskoses Harz mit den folgenden Analysedaten:
Viskosität $\eta_{80}$ = 60160 mPas;
Molekulargewicht (GPC): $M_w$ = 31500;
Phenolgehalt: 1,8 Val/kg.

Beispiel 7:

Unter Stickstoff legt man in einem trockenen Planschliffkolben 54,4 g Hexamethylendiioscyanat vor, gibt bei 100° C nacheinander 354 g trockenes Polypropylenglykol ($M_w$ = 2000), 1,8 g Trimethylolpropan, 0,1 ml Dibutylzinndilaurat und rührt 2 Stunden bei 100° C bis ein Iso cyanatgehalt von 2,5 % erreicht ist. Dann lässt man dieses Präpolymer zu einer Lösung von 100 g Bisphenol A in 300 ml trockenem Dioxan zufliessen und kocht 5 Stunden am Rückfluss. Das Dioxan wird bei 100° C/1,33 Pa im Vakuum abgezogen und man erhält ein viskoses Harz mit den folgenden Analysedaten:
Viskosität $\eta_{80}$ = 92160 mPas;
Molekulargewicht (GPC): $M_w$ = 25260; $M_n$ = 840, $M_w/M_n$ = 30;
Phenolgehalt: 1,8 Val/kg.

Beispiel 8:

Unter Stickstoff legt man in einem trockenen Planschliffkolben 54,4 g Hexamethylendiioscyanat vor, gibt bei 100° C nacheinander 354 g trockenes Polypropylenglykol ($M_w$ = 2000), 1,8 g Trimethylolpropan, 0,1 ml Dibutylzinndilaurat zu und rührt 2 Stunden bei 100° C. Dieses Präpoylmer wird zu einer Lösung von 110 g Bis-(4-hydroxyphenyl)-sulfon in 300 ml trockenem Dioxan gegeben und 5 Stunden am Rückfluss gekocht. Nach Abziehen des Dioxans bei 90° C/1,33 Pa erhält man ein viskoses Harz mit den folgenden Analysenda-

ten:
Viskosität $\eta_{80}$ = 71700 mPas;
Molekulargewicht (GPC): $M_w$ = 23720, $M_n$ = 560, $M_w/M_n$ = 42;
Phenolgehalt: 1,7 Val/kg.

Beispiel 9:

Unter Stickstoff legt man in einem trockenen Planschliffkolben 54,4 g Hexamethylendiioscyanat vor, gibt bei 100 °C nacheinander 354 g trockenes Polypropylenglykol ($M_w$ = 2000), 1,8 g Trimethylolpropan, 0,1 ml Dibutylzinndilaurat zu und rührt 2 Stunden bei 100 °C. Das erhaltene Präpolymer wird zu einer Lösung von 135 g 3,3′-Diallylbisphenol A in 300 ml trockenem Toluol gegeben und die Lösung 6 Stunden am Rückfluss gekocht. Nach Abziehen des Toluols bei 110 °C/1,33 Pa erhält man ein viskoses Harz mit den folgenden Analysendaten:
Viskosität $\eta_{40}$ = 116500 mPas;
Molekulargewicht (GPC): $M_w$ = 14750, $M_n$ = 944, $M_w/M_n$ = 16;
Phenolgehalt: 1,6 Val/kg.

Beispiel 10:

Unter Stickstoff legt man in einem trockenen Planschliffkolben 76 g Isophorondiioscyanat vor und gibt bei 100 °C nacheinander 303 g Polybutylenglykol ($M_w$ = 2000), 1,5 g Trimethylolpropan und 0,1 ml Dibutylzinndilaurat und rührt 2 Stunden bei 100 °C bis ein Isocyanatgehalt von 3,3 % erreicht ist. Dieses Präpolymer gibt man zu 115 g trockenem 3,3′-Diallylbisphenol A und rührt 3 Stunden bei 80 °C und 30 Minuten bei 105 °C bis kein freies Isocyanat mehr nachweisbar ist. Man erhält ein viskoses Harz mit den folgenden Analysendaten:
Viskosität $\eta_{80}$ = 64000 mPas;
Molekulargewicht (GPC): $M_n$ = 1740, $M_w/M_n$ = 8,8;
Phenolgehalt: 1,56 Val/kg.

Beispiel 11:

Unter Stickstoff legt man in einem trockenen Planschliffkolben 88,8 g Isophorondiisocyanat vor und gibt bei 100 °C innerhalb von 15 Minuten nacheinander 354 g Polypropylenglykol ($M_w$ 2000), 1,8 g Trimethylolpropan und 0,1 ml Dibutylzinndilaurat zu und rührt 2 Stunden bei 100 °C bis ein Isocyanatgehalt von 4,0 % erreicht ist. Dieses Präpolymer gibt man zu 135 g trockenem 3,3′-Diallylbisphenol A und rührt 3 Stunden bei 80 °C und 30 Minuten bei 100 °C bis kein freies Isocyanat mehr nachweisbar ist. Man erhält ein viskoses Harz mit den folgenden Analysedaten:
Viskosität $\eta_{80}$ = 12640 mPas;
Molekulargewicht (GPC): $M_n$ = 1630, $M_w/M_n$ = 7,2;
Phenolgehalt: 1,5 Val/kg.

Beispiel 12:

Unter Stickstoff legt man in einem trockenen Planschliffkolben 88,8 g Isophorondiisocyanat vor und gibt bei 100 °C innerhalb von 15 Minuten nacheinander 354 g Polypropylenglykol ($M_w$ 2000), 1,8 g Trimethylolpropan und 0,1 ml Dibutylzinndilaurat zu und rührt 2 Stunden bei 100 °C bis ein Isocyanatgehalt von 4,0 % erreicht ist. Dann gibt man 44 g p-Aminophenol zu und rührt 3 Stunden bei 120 °C. Man erhält ein viskoses Harz mit den folgenden Analysedaten:
Viskosität $\eta_{80}$ = 42800 mPas;
Molekulargewicht (GPC): $M_n$ = 1090, $M_w/M_n$ = 5,8;
Phenolgehalt: 0,83 Val/kg.

Beispiel 13:

Unter Stickstoff legt man in einem trockenen Planschliffkolben 88,8 g Isophorondiisocyanat vor und gibt bei 100 °C innerhalb von 15 Minuten nacheinander 354 g Polypropylenglykol ($M_w$ 2000), 1,8 g Trimethylolpropan und 0,1 ml Dibutylzinndilaurat zu und rührt 2 Stunden bei 100 °C bis ein Isocyanatgehalt von 4,0 % erreicht ist. Dann gibt man 118 g Bisphenol A zu und rührt 3 Stunden bei 120 °C bis kein freies Isocyanat mehr nachweisbar ist. Man erhält ein viskoses Harz mit den folgenden Analysedaten:
Viskosität $\eta_{80}$ = 11360 mPas;
Molekulargewicht (GPC): $M_n$ = 620, $M_w/M_n$ = 9,3;
Phenolgehalt: 2,4 Val/kg.

Beispiel 14:

Unter Stickstoff legt man in einem trockenen Planschliffkolben 70 g Toluylendiisocyanatisomerengemisch vor und gibt bei 100 °C nacheinander 354 g Polypropylenglykol ($M_w$ 2000), 1,8 g Trimethylolpropan, 0,1 ml Dibutylzinndilaurat zu und rührt 2 Stunden bei 100 °C bis ein Isocyanatgehalt von 4,0 % erreicht ist. Dieses Präpolymer lässt man bei 100 °C zu 135 g Diallylbisphenol A fliessen und rührt 3 Stunden bei 100 °C bis kein freies Isocyanat mehr nachweisbar ist. Es wird ein viskoses Harz mit den folgenden Analysedaten erhalten:
Viskosität $\eta_{80}$ = 17920 mPas;
Molekulargewicht (GPC): $M_n$ = 2000, $M_w/M_n$ = 6,4;
Phenolgehalt: 2,2 Val/kg.

Beispiel 15:

Man rührt 200 g Bisphenol A-diglycidylether (5,4 Val/kg Epoxidgehalt) und 200 g des phenolhaltigen Urethanpräpolymers aus Beispiel 2 in Gegenwart von 4 g Triphenylphosphin zwei Stunden bei 140 ° unter Stickstoffatmosphäre. Es wird ein viskoses Harz mit den folgenden Analysendaten erhalten:
Epoxidgehalt: 1,8 Val/kg (ber. 1,4 Val/kg);
Viskosität $\eta_{80}$ = 17280 mPas.

Beispiel 16:

Unter Stickstoff legt man in einem trockenen Planschliffkolben 54,4 g Hexamethylendiisocyanat vor und gibt bei 100 °C innerhalb von 60 Minuten eine Mischung aus 200 g trockenem dihydroxylterminiertem Polypropylenglykol ($M_n$ = 2000) und 0,1 ml Dibutylzinndilaurat zu. Dann versetzt man diese Reaktionsmischung mit 11,0 g 1,4-Cyclohexandimethanol, rührt 60 Minuten bei 100 °C und gibt dieses so erhaltene Präpolymer unter Stickstoff innerhalb von 30 Minuten bei 100 °C zu 135 g 3,3′-Diallylbisphenol A. Nach dreistündigem Rühren bei 100 °C ist kein freies Isocyanat mehr nachweisbar, und man erhält ein viskoses Harz mit den folgenden Analysendaten:
Viskosität $\eta_{80}$ = 9600 mPas.

Beispiel 17:

Unter Stickstoff legt man in einem Planschliffkolben 33,9 g Isophorondiisocyanat und 0,1 ml Dibutylzinndilaurat vor und gibt bei 100 °C innerhalb von 1 Stunde eine Mischung aus 137 g trockenem dihydroxylterminiertem Polypropylenglykol ($M_n$ = 2000) und 68,5 g trihydroxylterminiertem Polypropylenglykol ($M_n$ = 4000) zu. Nachdem 2 Stunden bei 100 °C gerührt wurde, gibt man dieses Präpolymer zu 50 g 3,3′-Diallylbisphenol A und rührt 3 Stunden bis kein freies Isocyanat mehr nachweisbar ist. Man erhält ein viskoses Harz mit den folgenden Analysendaten:
Viskosität $\eta_{40}$ = 246000 mPas;
Phenolgehalt: 1,15 Val/kg;
Molekulargewicht (GPC): $M_n$ = 1830, $M_w/M_n$ = 16.

Beispiel 18:

Unter Stickstoff legt man in einem trockenen Planschliffkolben 71,8 g Isophorondiisocyanat vor, gibt eine Mischung aus 354 g trockenem dihydroxylterminiertem Polytetrahydrofuran ($M_n$ = 2000), 1,8 g Trimethylolpropan und 0,1 ml Dibutylzinndilaurat zu und rührt 2 Stunen bei 100° C, bis ein Isocyanatgehalt von 2,3 % erreicht ist. Dieses so erhaltene Präpolymer lässt man bei 80° C zu 134 g 3,3′-Diallylbisphenol A fliessen. Nach 3 Stunden Rühren bei 80° C ist kein freies Isocyanat mehr nachweisbar, und man erhält ein viskoses Harz mit den folgenden Analysendaten:
Viskosität $\eta_{80}$ = 37760 mPas;
Molekulargewicht (GPC): $M_n$ = 1520, $M_w/M_n$ = 13,1.

Beispiel 19:

Unter Stickstoff legt man in einem trockenen Planschliffkolben 88,8 g Isophorondiioscyanat vor und gibt bei 80° C unter Rühren innerhalb von 30 Minuten eine Mischung aus 354 g trockenem dihydroxylterminiertem Polycaprolacton ($M_n$ = 2000), 1,8, g Trimethylolpropan und 0,1 ml Dibutylzinnlaurat zu. Nach 2 Stunden gibt man das so erhaltene Präpolymer zu 150 g 3,3′-Diallylbisphenol A und rührt weitere 3 Stunden bei 80° C bis kein freies Isocyanat mehr nachweisbar ist. Man erhält ein halbfestes Harz mit den folgenden Analysendaten:
Viskosität $\eta_{80}$ = 5760 mPas.

Beispiel 20:

Unter Stickstoff legt man in einem Planschliffkolben 95,4 g Isophorondiisocyanat vor und gibt bei 80° C 1,8 g Trimethylolpropan und 0,1 ml Dibutylzinndilaurat zu. Danach lässt man bei 80° C innerhalb von 2 Stunden eine Mischung aus 354 g dihydroxylterminiertem Polypropylenglykol ($M_n$ = 2000) und 80 g Bis-(aminopropyl)-polytetrahydrofuran ($M_n$ = 730) zufliessen, lässt 2 Stunden reagieren und setzt schliesslich 150 g 3,3′-Diallyl-bisphenol A zu. Nach 3 Stunden Reaktion bei 80° C ist kein freies Isocyanat mehr nachweisbar und man erhält ein viskoses Harz mit den folgenden Analysendaten:
Viskosität $\eta_{80}$ = 40960 mPas;
Molekulargewicht $M_n$ = 1200, $M_w/M_n$ = 18.

Beispiel 21:

Unter Stickstoff gibt man in einem trockenen Planschliffkolben zu 40 g Bis(isocyanatopropyl)-polytetrahydrofuran (hergestellt durch Phosgenieren eines mit trockenem HCl neutralisierten Bisaminopropyltetrahydrofurans des Molekulargewichts 750; Isocyanatgehalt 8,5 %) 11,6 g p-Aminophenol. Nach dreistündigem Rühren bei 80° C erhält man ein wachsartiges Harz mit den folgenden Analysendaten:
Viskosität: $\eta_{25}$ = 399400 mPas;
Phenolgehalt: 2,47 Val/kg.

Beispiel 22:

Unter Stickstoff gibt man in einem trockenen Planschliffkolben zu einem Gemisch aus 24,6 g 3,3′-Diallylbisphenol A und 0,1 ml Dibutylzinndilaurat 30 g Bis(isocyanatopropyl)-polytetrahydrofuran (hergestellt durch Phosgenierung eines mit trockenem HCl neutralisierten Bisaminopropyl-tetrahydrofurans des Molekulargewichts 750, Isocyanatgehalt 8,5 %). Nach dreistündigem Rühren bei 100° C erhält man ein viskoses Harz mit den folgenden Analysendaten:
Viskosität $\eta_{25}$ = 122880 mPas;
Phenolgehalt: 2,88 Val/kg.

Beispiel 23:

Unter Stickstoff gibt man in einem trockenen Planschliffkolben zu einem Gemisch aus 28,0 g 3,3'-Diallylbisphenol A und 0,1 ml Dibutylzinndilaurat 50 g Bisisocyanatopropylpolytetrahydrofuran (hergestellt durch Phosgenierung eines mit trockenem HCl neutralisierten Bisaminopropylpolytetrahydrofurans des Molekulargewichts 1100; Isocyanatgehalt 3,1 %). Nach fünfstündigem Rühren bei 80 °C erhält man ein viskoses Harz mit den folgenden Analysendaten:
Viskosität $\eta_{25}$ = 21600 mPas;
Phenolgehalt: 2,18 Val/kg.

Beispiel 24:

Unter Stickstoff gibt man in einen trockenen Kolben zu 50 g Bisisocyanatopropylpolytetrahydrofuran (hergestellt durch Phosgenierung eines mit trockenem HCl neutralisierten Bisaminopropylpolytetrahydrofurans des Molekulargewichts 1100, Isocyanatgehalt 3,1 %) 10 g p-Aminophenol und rührt 5 Stunden bei 100 °C. Man erhält ein viskoses Harz mit den folgenden Analysendaten:
Viskosität: $\eta_{25}$ = 67840 mPas;
Phenolgehalt: 2,03 Val/kg.

Beispiel 25:

Unter Stickstoff gibt man in einen trockenen Kolben zu 50 g Bisisocyanatopropylpolytetrahydrofuran (hergestellt durch Phosgenierung eines mit trockenem HCl neutralisierten Bisaminopropylpolytetrahydrofuran des Molekulargewichts 2100, Isocyanatgehalt: 1,2 %) 5,1 g p-Aminophenol. Nach 4 Stunden Rühren bei 100 °C erhält man ein viskoses Harz mit den folgenden Analysendaten:
Viskosität: $\eta_{25}$ = 25600 mPas;
Phenolgehalt: 1,61 Val/kg.

Beispiel 26:

Unter Stickstoff gibt man in einen trockenen Kolben zu einer Mischung aus 14,6 g 3,3'-Diallylbisphenol A und 0,1 ml Dibutylzinndilaurat 50 g Bisisocyanatopropylpolytetrahydrofuran (hergestellt durch Phosgenierung eines mit trockenem HCl neutralisierten Bisaminopropylpolytetrahydrofurans des Molekulargewichts 2100, Isocyanatgehalt 1,2 %). Nach 4 Stunden Rühren bei 100 °C erhält man ein viskoses Harz mit den folgenden Analysendaten:
Viskosität: $\eta_{25}$ = 24320 mPas;
Phenolgehalt: 0,75 Val/kg.

Beispiel 27:

Unter Stickstoff gibt man in einen trockenen Kolben zu 20 g diisocyanat-terminiertem Polypropylenglykol (Isocyanatgehalt 20 %, hergestellt durch Phosgenierung von Jeffamine® D230 der Firma Texaco) eine Mischung aus 56,5 g 3,3'-Diallylbisphenol A und 0,1 ml Dibutylzinndilaurat. Nach vierstündigem Erhitzen bei 100 °C erhält man ein wachsartiges Harz mit den folgenden Analysendaten:
Viskosität: $\eta_{80}$ = 1520 mPas;
Phenolgehalt: 4,76 Val/kg.

Beispiel 28:

Unter Stickstoff gibt man zu 25 g diisocyanat-terminiertem Polypropylenglykol (Isocyanatgehalt 20 %, hergestellt durch Phosgenierung von bisamino-terminiertem Polypropylenglykol des Molekulargewichts 230, erhältlich als Jeffamine® D230 der Firma Texaco) 23,5 g p-Aminophenol. Nach dreistündigem Rühren bei 100 °C erhält man ein viskoses Harz mit den folgenden Analysendaten:
Viskosität: $\eta_{120}$ = 2800 mPas;
Phenolgehalt: 5,2 Val/kg.

Beispiel 29:

Unter Stickstoff gibt man in einen trockenen Kolben zu einer Mischung aus 10,8 g 3,3′-Diallyl-bisphenol A und 0,1 ml Dibutylzinndilaurat 29,2 g eines diisocyanat-terminierten Polypropylenglykols (Isocyanatgehalt 3,6 %, hergestellt durch Phosgenierung eines mit trockenem HCl neutralisierten als Jeffamine® D2000 von Texaco erhältlichen bisamino-terminierten Polypropylenglykols des Molekulargewichts 2000). Nach 6 Stunden Rühren bei 100 °C erhält man ein viskoses isocyanatfreies Harz mit den folgenden Analysendaten:
Viskosität: $\eta_{25}$ = 44160 mPas;
Phenolgehalt: 1,73 Val/kg.

Beispiel 30:

Unter Stickstoff gibt man in einen trockenen Kolben zu 44,6 g diisocyanatterminiertem Polypropylenglykol (Isocyanatgehalt 3,6 %, hergestellt durch Phosgenierung eines mit trockenem HCl neutralisierten als Jeffamine® D 2000 von Texaco erhältlichen bisaminoterminierten Poly propylenglykols des Molekulargewichts 2000) 4,9 g p-Aminophenol. Nach 5 Stunden Rühren bei 100 °C erhält man ein isocyanatfreies viskoses Harz mit den folgenden Analysendaten:
Viskosität $\eta_{25}$ = 63360 mPas;
Phenolgehalt: 0,96 Val/kg.

Beispiel 31:

Unter Stickstoff gibt man 40 g diisocyanat-terminiertes Polypropylenglykol (Isocyanatgehalt 1,8 %, hergestellt durch Phosgenierung des mit trockenem HCl neutralisierten kommerziell als Jeffamine® D4000 erhältlichen bisamino-terminierten Polypropylenglykols mit dem Molekulargewicht 4000) zu einer Mischung aus 7,2 g 3,3′-Diallylbisphenol A und 0,05 ml Dibutylzinndilaurat. Nachdem 6 Stunden bei 100 °C und 1 Stunde bei 140 °C erhitzt wurde erhält man ein isocyanatfreies viskoses Harz mit den folgenden Analysendaten:
Viskosität: $\eta_{25}$ = 20480 mPas;
Phenolgehalt: 0,97 Val/kg.

Beispiel 32:

Unter Stickstoff gibt man zu 50 g diisocyanat-terminiertem Polypropylenglykol (Isocyanatgehalt 1,8 %, hergestellt durch Phosgenierung des mit trockenem HCl neutralisierten kommerziell als Jeffamine® D4000 erhältlichen bisamino-terminierten Polypropylenglykols mit dem Molekulargewicht 4000) 3 g p-Aminophenol und rührt 6 Stunden bei 140 °C bis ein viskoses isocyanatfreies Harz mit den folgenden Analysendaten gebildet ist:
Viskosität: $\eta_{25}$ = 7040 mPas;
Phenolgehalt: 0,52 Val/kg.

Beispiel 33:

Unter Stickstoff gibt man zu 50 g triisocyanat-terminiertem Polypropylenglykol (Isocyanatgehalt 16,1 %, hergestellt durch Phosgenierung des mit trockenem HCl neutralisierten kommerziell als Jeffamine® T403 erhältlichen Polypropylenglykoltriamins mit dem Molekulargewicht 400) 40,5 g p-Aminophenol und lässt 3 Stunden bei 100 °C und 2 Stunden bei 140 °C reagieren. Man erhält ein bei Raumtemperatur festes Harz mit den folgenden Analysendaten:
Viskosität: $\eta_{120}$ = 24960 mPas;
Phenolgehalt: 6,84 Val/kg.

Beispiel 34:

Unter Stickstoff gibt man zu 50 g triisocyanat-terminiertem Polypropylenglykol (Isocyanatgehalt 16,1 %, hergestellt durch Phosgenierung des kommerziell als Jeffamine® T 3000 erhältlichen Polypropylenglykoltriamins mit dem Molekulargewicht von 3000) 5,5 g p-Aminophenol und kocht 5 Stunden bei 100 °C. Man erhält ein viskoses Harz mit den folgenden Analysendaten:
Viskosität: $\eta_{25}$ = 89600 mPas;
Phenolgehalt: 1,0 Val/kg.

Beispiel 35:

Unter Stickstoff gibt man zu 50 g triisocyanat-terminiertem Polypropylenglykol (Isocyanatgehalt 1,5 %, hergestellt durch Phosgenierung des mit trockenem HCl neutralisierten kommerziell als Jeffamine® T5000 erhältlichen Polypropylenglykoltriamins mit dem Molekulargewicht 5000) 3,27 g p-Aminophenol und rührt 3 Stunden bei 100 °C. Man erhält ein viskoses isocyanatfreies Harz mit den folgenden Analysendaten:
Viskosität: $\eta_{25}$ = 58880 mPas;
Phenolgehalt: 0,55 Val/kg.

Beispiel 36:

Unter Stickstoff gibt man zu 50 g triisocyanat-terminiertem Polypropylenglykol (Isocyanatgehalt 1,6 %, hergestellt durch Phosgenierung des mit trockenem HCl neutralisierten kommerziell als Jeffamine® T 3000 erhältlichen Polypropylenglykoltriamins mit dem Molekulargewicht 3000) eine Mischung aus 15,4 g 3,3′-Diallylbisphenol A und 0,1 ml Dibutylzinnndilaurat und erhitzt 6 Stunden bei 100 °C und 2 Stunden bei 140 °C bis man ein isocyanatfreies Harz mit den folgenden Analysendaten erhält:
Viskosität: $\eta_{25}$ = 87040 mPas;
Phenolgehalt: 1,53 Val/kg.

Beispiel 37:

Unter Stickstoff gibt man zu 50,4 g Hexamethylendiioscyanat innerhalb von 20 Minuten eine Mischung aus 99 g 3,3′-Diallyl-bisphenol A, 400 g diamino-terminiertem Polypropylenglykol des Molekulargewichts 4000 (Jeffamine® D4000) und 0,1 ml Dibutylzinndilaurat. Danach wird 5 Stunden bei 110 °C gerührt. Man erhält ein viskoses isocyanatfreies Harz mit den folgenden Analysendaten:
Viskosität: $\eta_{40}$ = 194600 mPas;
Molekulargewicht (GPC): $M_n$ = 2900, $M_w/M_n$ = 5,7;
Phenolgehalt: 1,14 Val/kg.

Beispiel 38:

Unter Stickstoff gibt man innerhalb von 30 Minuten zu 51 g Isophorondiisocyanat eine Mischung aus 400 g diamino-terminiertem Polypropylenglykol des Molekulargewichts 4000 (Jeffamine® D4000), 50 g triamino-terminiertem Polypropylenglykol des Molekulargewichts 5000 (Jeffamine® T5000) und 84 g 3,3′-

Diallyl-bisphenol A. Nach vierstündigem Rühren bei 110 °C erhält man ein isocyanatfreies viskoses Harz mit den folgenden Analysendaten:
Viskosität $\eta_{40}$ = 156160 mPas;
Molekulargewicht (GPC): $M_n$ = 3000, $M_w/M_n$ = 5,6;
Phenolgehalt: 0,93 Val/kg.

Beispiel 39:

Unter Stickstoff gibt man zu 89 g Isophorondiisocyanat innerhalb von 30 Minuten eine Mischung aus 400 g diamino-terminiertem Polypropylenglykol des Molekulargewichts 4000 (Jeffamine® D4000) und 23 g diamino-terminiertem Polypropylenglykol des Molekulargewichts 230 (Jeffamine® D230) und 136 g 3,3′-Diallylbisphenol A. Danach rührt man 1 Stunde bei 100 °C, gibt 0,1 ml Dibutylzinndilaurat zu und rührt 3 Stunden bei 100 °C ein isocyanatfreies Harz mit den folgenden Eigenschaften erhalten wird:
Viskosität $\eta_{80}$ = 97280 mPas;
Molekulargewicht (GPC): $M_n$ = 2400, $M_w/M_n$ = 5,3;
Phenolgehalt: 1,35 Val/kg.

Beispiel 40:

Unter Stickstoff gibt man zu 89 g Isophorondiisocyanat innerhalb von 30 Minuten ohne Heizung eine Mischung aus 400 g diamino-terminiertem Polypropylenglykol des Molekulargewichts 2000 (Jeffamine® D2000) und 136 g 3,3′-Diallylbisphenol A. Danach versetzt man mit 0,1 ml Dibutylzinndilaurat und kocht 3 Stunden bei 100 °C. Man erhält ein isocyanatfreies Harz mit den folgenden Analysendaten:
Viskosität $\eta_{120}$ = 7040 mPas;
Molekulargewicht (GPC): $M_n$ = 2400, $M_w/M_n$ = 6,9;
Phenolgehalt: 1,38 Val/kg.

Beispiel 41:

Unter Stickstoff lässt man 27,2 g o-Phenylencarbonat mit 105 g Bisaminopropyl-polybutylenglykol ($M_n$ = 1100) in Gegenwart von 0,5 g Dibutylzinnoxid 6 Stunden bei 120 °C reagieren und erhält ein viskoses Harz mit folgenden Analysendaten:
Viskosität nach Epprecht: 71680 mPas (bei 25 °C);
Phenolgehalt: 1,76 Val/kg.

Beispiel 42:

Unter Stickstoff lässt man 27 g 2′-Benzoxazolinon mit 105 g Bis-aminopropyl-polybutylenglykol ($M_n$ = 1100) in Gegenwart von 0,5 g Dibutylzinnoxid 6 Stunden bei 160 °C reagieren und erhält ein viskoses Harz mit folgenden Analysendaten:
Viskosität nach Epprecht: 87040 mPas (bei 25 °C);
Phenolgehalt: 1,87 Val/kg.

Beispiel 43:

Unter Stickstoff gibt man zu 27,2 g Hexamethylendiisocyanat innerhalb von einer Stunde bei 100 °C eine Mischung aus 313 g hydroxylterminiertem mit Styrol-Acrylnitril gepfropftem Polyalkylenether (Niax®24-32 von Union Carbide), 0,1 ml Dibutylzinndilaurat und 0,9 g Trimethylolpropan. Nach weiteren zwei Stunden gibt man dieses isocyanatterminierte Präpolymere zu 68,0 g Diallylbisphenol A und rührt 3 Stunden bei 100 °C bis kein freies Isocyanat mehr nachweisbar ist. Man erhält ein phenolterminiertes Pfropfpolymer mit den folgenden Analysendaten:
Viskosität (nach Epprecht): 40900 mPas (80 °C).

Beispiel 44:

Unter Stickstoff gibt man zu 354 g dihydroxylterminiertem Polypropylenglykol ($M_w$ = 2000) innerhalb von 2 Stunden bei 75 °C eine Mischung aus 12,5 g Acrylnitril, 37,5 g Styrol, 0,5 g Azoisobutyronitril und lässt vier Stunden bei 80-85 °C Innentemperatur reagieren. Nach Zugabe von 0,1 ml Dibutylzinndilaurat lässt man das Pfropfpolymer bei 100 °C innerhalb 1 Stunde zu 54,4 g Hexamethylendiisocyanat fliessen. Nach 3 Stunden Rühren bei 100 °C gibt man das so erhaltene isocyanat-termi nierte Pfropfpolymer zu 135 g o,o′-Diallylbisphenol A und lässt zwei Stunden bei 100 °C reagieren. Man erhält ein Harz mit den folgenden Analysendaten:
Viskosität (nach Epprecht): 158720 mPas (40 °C);
Phenolgehalt: 1,7 Val/kg.

Beispiel 45:

Man verfährt wie im Beispiel 44 doch gibt man bei der Pfropfung eine Mischung aus 50 g Styrol und 0,5 g Azoisobutyronitril zu und erhält ein phenolhaltiges Harz mit den folgenden Analysendaten:
Viskosität (nach Epprecht): 143360 mPas (40 °C);
Phenolgehalt: 1,6 Val/kg.

Beispiel 46:

Unter Stickstoff legt man in einem trockenen Planschliffkolben 88 g Isophorondiisocyanat vor und gibt unter Rühren bei 100 °C innerhalb von 1 Stunde eine Mischung aus 25 g hydroxylterminiertem Polybutadien (ARCO RD 45 HT) und 0,1 ml Dibutylzinndilaurat zu. Nachdem 1 Stunde gerührt ist, gibt man innerhalb 1 Stunde 300 g trockenes dihydroxylterminiertes Polybutylenglykol ($M_n$ = 2000) zu und lässt anschliessend 2 Stunden bei 100 °C rühren. Das so erhaltene isocyanatterminierte Präpolymer wird unter Feuchtigkeitsausschluss zu 150 g 3,3′-Diallyl-Bisphenol A gegeben. Nach 3 Stunden Rühren bei 100 °C erhält man ein viskoses isocyanatfreies Harz mit den folgenden Analysendaten:
Viskosität nach Epprecht: $\eta_{80}$ = 56320 mPas
Phenolgehalt: 1,68 Val/kg
Molekulargewicht (GPC): $M_n$ = 1700, $M_w/M_n$ = 9,0.

Beispiel 47:

Die Präpolymerherstellung wird analog Beispiel 46 ausgeführt, doch verwendet man nun 50 g hydroxylterminiertes Polybutadien (ARCO RD 45 HT) und 250 g Polybutylenglykol. Man erhält ein viskoses isocyanatfreies Harz mit den folgenden Analysendaten:
Viskosität nach Epprecht: $\eta_{80}$ = 84480 mPas
Phenolgehalt: 1,76 Val/kg
Molekulargewicht (GPC): $M_n$ = 1890, $M_w/M_n$ = 9,1.

B. Anwendungsbeispiele

Beispiel I: Verklebungen mit der Verbindung gemäss Beispiel 1

Auf einem Dreiwalzenstuhl werden 50 g Bisphenol-A-diglycidylether (Epoxidgehalt: 5,4 Val/kg), 3,8 g Dicyandiamid, 1,3 g Chlortoluron, 0,5 g pyrogene Kieselsäure (Aerosil 380) und 20 g Kreide (Durcal 5) mit 30 g der Verbindung gemäss Beispiel 1 gemischt. Bei der Verklebung erhält man folgende Resultate:
Zugscherfestigkeit auf entfettetem Stahl: 22,2 $N/mm^2$;
Glasübergangstemperatur: 83 °C (bestimmt mittels dynamisch-mechanischer Spektroskopie auf einem DuPont 9000 Thermoanalysegerät);
Winkelschälwiderstand ("T-Peel") auf entfettetem Stahl: 3,6 N/mm (100 % Kohäsionsbruch).

Beispiel II: Verklebungen mit der Verbindung gemäss Beispiel 2:

Auf einem Dreiwalzenstuhl werden 50 g Bisphenol-A-diglycidylether (Epoxidgehalt: 5,4 Val/kg), 3,8 g Dicyandiamid, 1,3 g Chlortoluron, 0,5 g pyrogene Kieselsäure (Aerosil 380) und 200 g Kreide (Durcal 5) mit 30 g der Verbindung gemäss Beispiel 2 vermischt. Bei der Verklebung erhält man die folgenden Resultate:
Zugscherfestigkeit auf entfettetem Stahl: 28 $N/mm^2$;
Glasübergangstemperatur: 70 °C (bestimmt mittels dynamisch-mechanischer Spektroskopie auf einem DuPont 9000 Thermoanalysegerät);
Winkelschälwiderstand ("T-Peel") auf 0,8 mm dickem entfettetem Stahl: 4,9 N/mm (90-100 % Kohäsionsbruch).

Beispiel III

Eine Mischung von 15 g Epoxy-Cashewnutöl-Novolak mit einem Epoxidgehalt von 2,2 Val/kg (Hergestellt durch Umsetzung von Cashewnutöl mit Formaldehyd und anschliessender Glycidylisierung mit Epichlorhydrin.) und 15 g des phenolischen Urethanpräpolymeren aus Beispiel 2 sowie 10 g Bisphenol A-diglycidylether, 3 g Verdünner (Actrel 400), 8 g Wollastonit $P_1$, 4 g Talk, 0,6 g pyrogene Kieselgsäure (Aerosil 380), 1,0 g Dicyandiamid und 0,3 g Chlortoluron ergibt bei der Härtung (30 Minuten/180 °C) eine flexible Masse mit einer Zugscherfestigkeit auf entfettetem, sandgestrahltem 1,5 mm dickem Aluminium von 2,9 $N/mm^2$ und einem Winkelschälwiderstand auf entfettetem 0,8 mm dickem Stahl von 1,4 N/mm.

## Ansprüche

1. Wasserunlösliche Verbindungen der Formel I

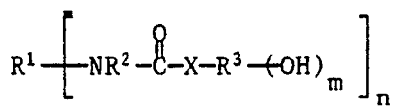 (I),

worin m 1 oder 2 ist, n 2 bis 6 bedeutet, $R^1$ der n-wertige Rest eines in Epoxidharzen löslichen oder dispergierbaren, elastomeren Präpolymeren nach dem Entfernen der endständigen Isocyanat- oder Aminogruppen ist,
$R^2$ Wasserstoff, $C_1$-$C_6$Alkyl oder Phenyl bedeutet,
$R^3$ ein m+1-wertiger Rest eines Polyphenols oder Aminophenols nach dem Entfernen der phenolischen Hydroxylgruppen und gegebenenfalls der Aminogruppe ist, und X -O- oder $-NR^2-$ bedeutet.

2. Verbindungen der Formel I gemäss Anspruch 1, worin der Rest $R^3$ sich ableitet von einem Bisphenol der Formel IV

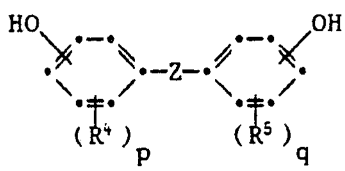 (IV),

worin Z eine direkte C-C-Bindung ist oder ein Brückenglied ausgewählt aus der Gruppe bestehend aus $-CR^6R^7-$, -O-, -S-, $-SO_2-$ -CO-, -COO-, $-CONR^8-$ und $-SiR^9R^{10}-$ ist, $R^4$ und $R^5$ unabhängig voneinander $C_1$-$C_{20}$Alkyl, $C_2$-$C_6$Alkenyl, $C_2$-$C_6$Alkinyl oder Halogen darstellen, p und q unabhängig voneinander 0, 1 oder 2 bedeuten, $R^6$ , $R^7$ und $R^8$ unabhängig voneinander Wasserstoff, $-CF_3$ oder $C_1$-$C_6$Alkyl sind oder $R^6$ und $R^7$ zusammen mit dem gemeinsamen C-Atom einen cycloaliphatischen Rest mit 5-12 Ring-C-Atomen bilden und $R^9$ und $R^{10}$ $C_1$-$C_6$Alkyl bedeuten.

3. Verbindungen der Formel I gemäss Anspruch 2, worin Z ausgewählt wird aus der Gruppe bestehend aus $-CH_2-$, $-C(CF_3)_2-$, -O-, $-SO_2-$, einer direkten C-C-Bindung und $-C(CH_3)_2-$, p und q jeweils 0 oder 1 sind und $R^4$ und $R^5$ $C_1$-$C_6$Alkyl, $C_2$-$C_6$Alkenyl oder $C_2$-$C_6$Alkinyl bedeuten.

4. Verbindungen der Formel I gemäss Anspruch 1, worin der Rest $R^3$ sich ableitet von einem einkernigen Aminophenol oder einkernigen Polyphenol.

5. Verbindungen der Formel I gemäss Anspruch 1, die im wesentlichen frei von Isocyanatgruppen sind und wenigstens zwei freie phenolische Hydroxylgruppen aufweisen und die erhältlich sind durch Umsetzung von

a) einem präpolymeren Polyisocyanat, welches

a1) ein Addukt eines Polyisocyanats an eine präpolymere Polyhydroxyl-oder Polysulfhydrylverbindung oder an ein Gemisch solcher Verbindungen gegebenenfalls in Kombination mit einem Kettenverlängerer ist, oder

a2) sich ableitet von einem präpolymeren Polyetheramin, mit

b) mindestens einem Phenol mit zwei oder drei phenolischen Hydroxylgruppen oder mit einem Aminophenol mit ein oder zwei phenolischen Hydroxylgruppen.

6. Verbindungen der Formel I gemäss Anspruch 5, worin Komponente a) ein präpolymeres Polyisocyanat ist, das eine mittlere Isocyanatfunktionalität von 2 bis 3 besitzt.

7. Verbindungen gemäss Anspruch 5, worin Komponente a1) ein Addukt eines Polyisocyanats an ein hydroxyl-terminiertes Präpolymeres mit einem mittleren Molekulargewicht von 150-10000 ist.

8. Verbindungen gemäss Anspruch 5, worin die Aufbaukomponente zur Herstellung von Komponente a1) ein hydroxyl-terminierter Polyether oder Polyester ist.

9. Verbindungen gemäss Anspruch 5, worin die Aufbaukomponente zur Herstellung von Komponente a1) ein Gemisch aus einem hydroxyl-terminierten Polybutadien und einem hydroxyl-terminierten Polyalkylenglykol ist oder ein hydroxyl-terminiertes Polyalkylenglykol mit aufgepfropften 1-Olefinen ist.

10. Verbindungen gemäss Anspruch 5, worin die Aufbaukomponente zur Herstellung von Komponente a1) ein hydroxyl-terminiertes Polyalkylenglykol ist.

11. Verbindungen der Formel V gemäss Anspruch 1

$$[\{(HO\!-\!)_m R^3-Y-\overset{O}{\overset{\|}{C}}-NH-\}_r R^{13}-NH-\overset{O}{\overset{\|}{C}}-O-]_n R^{14} \quad (V)$$

worin $R^3$, m und n die im Anspruch 1 definierte Bedeutung besitzen, r eine ganze Zahl zwischen 1 und 3 ist, Y -O- oder -NH- bedeutet, $R^{13}$ der r+1-wertige Rest eines aliphatischen, cycloaliphatischen, aromatischen oder araliphatischen Polyisocyanats nach dem Entfernen der Isocyanatgruppen ist, $R^{14}$ ein n-wertiger hydroxyl-terminierter Polyester- oder Polyetherrest nach dem Entfernen der enständigen OH-Gruppen ist, mit der Massgabe, dass der Index m und die Reste $R^3$ und $R^{13}$ innerhalb eines gegebenen Moleküls unterschiedlich sein können.

12. Verbindungen der Formel V gemäss Anspruch 11, worin m 1 ist, n 2 oder 3 bedeutet, r 1 ist, Y -O- ist, $R^{13}$ sich ableitet von einem aliphatischen, cycloaliphatischen oder aromatischen Diisocyanat und $R^{14}$ ein zwei- oder dreiwertiger Rest eines hydroxyl-terminierten Polyesters oder Polyethers mit einem Molekulargewicht von 150 bis 10000 nach dem Entfernen der endständigen Hydroxylgruppen ist.

13. Verbindungen der Formel V gemäss Anspruch 11, worin m 1 ist, n 2 oder 3 bedeutet, r 1 ist, Y -O- ist, $R^{13}$ sich ableitet von einem aliphatischen oder cycloaliphatischen Diisocyanat und $R^{14}$ ein zwei- oder dreiwertiger Rest eines Polyalkylenetherpolyols mit einem Molekulargewicht von 150 bis 3000 nach dem Entfernen der endständigen Hydroxylgruppen ist.

14. Verbindungen gemäss Anspruch 13, worin n 2 bedeutet und $R^{14}$ ein Strukturelement der Formel VI ist,

$$-(C_sH_{2s}-O-)_x-C_sH_{2s}- \quad (VI)$$

worin s 3 oder 4 bedeutet, x eine ganze Zahl von 5 bis 40 ist und die Einheiten $-C_sH_{2s}-O-$ innerhalb eines gegebenen Strukturelementes der Formel VI im Rahmen der gegebenen Definitionen unterschiedlich sein können.

15. Verbindungen der Formel I gemäss Anspruch 1 erhältlich durch Umsetzung von

a) einem Addukt einer im wesentlichen äquivalenten Menge eines Diisocyanates mit einem Gemisch aus einem di- oder tri-hydroxyl-terminierten Polyether oder Polyester und weniger als 1 Gew.-%, bezogen auf das hydroxyl-terminierte Präpolymere, eines kurzkettigen Diols oder Triols und

b) einer dem NCO-Gehalt im wesentlichen äquivalenten Menge eines Bisphenols oder Trisphenols.

16. Verbindungen der Formel VII gemäss Anspruch 1

$$\left[(HO\!\!-\!\!)_m R^3\!-\!Y\!-\!\!\left(\!-\overset{O}{\overset{\|}{C}}\!-NH\!-\!R^{15}\!-\!\right)_t\!\overset{O}{\overset{\|}{C}}\!-NH\!-\right]_n R^{16} \qquad (VII),$$

worin $R^3$, m und n die in Anspruch 1 definierte Bedeutung besitzen, Y -O- oder -NH- ist, t 0 oder 1 ist, $R^{15}$ der zweiwertige Rest eines aliphatischen, cycloaliphatischen, aromatischen oder araliphatischen Diisocyanats nach dem Entfernen der Isocyanatgruppen ist und $R^{16}$ der n-wertige Rest eines amino-terminierten Polyalkylenethers nach dem Entfernen der endständigen $NH_2$-Gruppen ist.

17. Verbindungen der Formel VII gemäss Anspruch 16, worin m 1 ist, n 2 oder 3 bedeutet, Y -O- ist, $R^{15}$ sich ableitet von einem aliphatischen, cycloaliphatischen oder aromatischen Diisocyanat und $R^{16}$ ein zwei- oder dreiwertiger Rest eines amino-terminierten Polyalkylenethers mit einem Molekulargewicht von 150 bis 10000 nach dem Entfernen der endständigen Aminogruppen ist.

18. Verbindungen der Formel VII gemäss Anspruch 16, worin m 1 ist, n 2 bedeutet, t 0 ist, Y -O- bedeutet und $R^{16}$ sich ableitet von einem zweiwertigen amino-terminierten Polyalkylenether mit einem Molekulargewicht von 150 bis 6000.

19. Verbindungen der Formel VII gemäss Anspruch 16, worin m und t 1 sind, n 2 bedeutet, $R^{15}$ der zweiwertige Rest eines aliphatischen oder cycloaliphatischen Diisocyanats nach dem Entfernen der Isocyanatgruppen ist und $R^{16}$ sich ableitet von einem zweiwertigen amino-terminierten Polyalkylenether mit einem Molekulargewicht von 150 bis 6000.

20. Verfahren zur Herstellung von Verbindungen der Formel I gemäss Anspruch 1 umfassend die Umsetzung einer Verbindung oder mehrerer Verbindungen der Formel IIa mit einer Verbindung oder mehreren Verbindungen der Formel IIIa

$R^1\!-\!\!(NCO)_n$ (IIa),

$H\text{-}X\text{-}R^3\!-\!\!(OH)_m$ (IIIa),

wobei die Verbindung(en) der Formel IIIa in einer solchen Menge anwesend ist (sind), dass die freien NCO-Gruppen der Verbindung(en) der Formel IIa im wesentlichen durch die Reaktion verbraucht werden, dass pro Verbindung der Formel IIIa vorwiegend eine OH- oder $NH_2$-Gruppe reagiert, und worin $R^1$, $R^3$, X, m und n die in Anspruch 1 definierte Bedeutung besitzen.

21. Verfahren zur Herstellung von Verbindungen der Formel I gemäss Anspruch 1, worin X $-NR^2-$ bedeutet, umfassend die Umsetzung einer Verbindung oder mehrerer Verbindungen der Formel IIb mit einer Verbindung oder mehreren Verbindungen der Formel IIIb

$R^1\!-\!\!(NR^2H)_n$ (IIb),

$R^{11}\text{-O-}\overset{O}{\overset{\|}{C}}\text{-}NR^2\text{-}R^3\!-\!\!(OH)_m$ (IIIb),

wobei die Komponenten IIb und IIIb im wesentlichen in stöchiometrischem Verhältnis vorgegeben werden oder worin Komponente IIIb in geringem Ueberschuss vorliegt, so dass durch Erhitzen des Gemisches praktisch alle freien Aminogruppen von IIb verkappt werden, und worin $R^1$, $R^2$, $R^3$, m und n die in Anspruch 1 definierte Bedeutung besitzen, und $R^{11}$ ein Alkyl-oder Arylrest ist.

22. Verfahren zur Herstellung von Verbindungen der Formel I gemäss Anspruch 1 mit ortho- oder peri-Phenolen oder Aminophenolen als Endgruppen, umfassend die Umsetzung einer Verbindung oder mehrerer Verbindungen der Formel IIb mit einer Verbindung oder mehreren Verbindungen der Formel IIIc

$R^1\!-\!\!(NR^2H)_n$ (IIb),

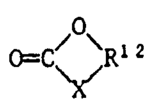 (IIIc),

wobei die Komponenten IIb und IIIc im wesentlichen in stöchiometrischem Verhältnis vorgegeben werden

oder worin Komponente IIIc in geringem Ueberschuss vorliegt, so dass durch Erhitzen des Gemisches praktisch alle freien Aminogruppen von IIb verkappt werden, und worin $R^1$, $R^2$, X und n die in Anspruch 1 definierte Bedeutung besitzen, und $R^{12}$ ein zweiwertiger carbocyclisch-aromatischer Rest mit einer der für $R^3$ gemäss Anspruch 1 definierten Bedeutungen ist, an dem die Gruppen -O- und -X- sich jeweils in ortho- oder peri-Stellung zueinander befinden.

23. Verwendung der Verbindungen der Formel I gemäss Anspruch 1 als Flexibilisatoren für Epoxidharze.

24. Zusammensetzungen enthaltend
i) eine Epoxidverbindung mit wenigstens zwei 1,2-Epoxidgruppen pro Molekül und
ii) eine Verbindung der Formel I gemäss Anspruch 1.

25. Schmelzbare aber noch härtbare Addukte erhältlich durch Erhitzen der Zusammensetzung aus Komponenten i) und ii) gemäss Anspruch 24 in an sich bekannter Weise.

26. Verwendung der Zusammensetzungen gemäss Anspruch 24 oder der Addukte gemäss Anspruch 25 als Klebstoffe, Klebfilme, Matrixharze, Lacke, Dichtungsmassen oder Patches.

27. Gehärtete Produkte erhältlich durch Härten der Zusammensetzungen gemäss Anspruch 24 oder der Addukte gemäss Anspruch 25.

Patentansprüche für den folgenden Vertragsstaat: ES

1. Zusammensetzungen enthaltend
i) eine Epoxidverbindung mit wenigstens zwei 1,2-Epoxidgruppen pro Molekül und
ii) eine wasserunlösliche Verbindungen der Formel I

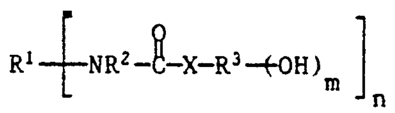

(I),

worin m 1 oder 2 ist, n 2 bis 6 bedeutet, $R^1$ der n-wertige Rest eines in Epoxidharzen löslichen oder dispergierbaren, elastomeren Präpolymeren nach dem Entfernen der endständigen Isocyanat- oder Aminogruppen ist,
$R^2$ Wasserstoff, $C_1$-$C_6$Alkyl oder Phenyl bedeutet,
$R^3$ ein m+1-wertiger Rest eines Polyphenols oder Aminophenols nach dem Entfernen der phenolischen Hydroxylgruppen und gegebenenfalls der Aminogruppe ist, und X -O- oder -$NR^2$- bedeutet.

2. Zusammensetzungen gemäss Anspruch 1, worin der Rest $R^3$ sich ableitet von einem Bisphenol der Formel IV

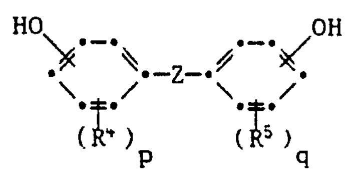

(IV),

worin Z eine direkte C-C-Bindung ist oder ein Brückenglied ausgewählt aus der Gruppe bestehend aus -$CR^6R^7$-, -O-, -S-, -$SO_2$- -CO-, -COO-, -$CONR^8$- und -$SiR^9R^{10}$- ist, $R^4$ und $R^5$ unabhängig voneinander $C_1$-$C_{20}$Alkyl, $C_2$-$C_6$Alkenyl, $C_2$-$C_6$Alkinyl oder Halogen darstellen, p und q unabhängig voneinander 0, 1 oder 2 bedeuten, $R^6$ , $R^7$ und $R^8$ unabhängig voneinander Wasserstoff, -$CF_3$ oder $C_1$-$C_6$Alkyl sind oder $R^6$ und $R^7$ zusammen mit dem gemeinsamen C-Atom einen cycloaliphatischen Rest mit 5-12 Ring-C-Atomen bilden und $R^9$ und $R^{10}$ $C_1$-$C_6$Alkyl bedeuten.

3. Zusammensetzungen gemäss Anspruch 2, worin Z ausgewählt wird aus der Gruppe bestehend aus -$CH_2$-, -$C(CF_3)_2$-, -O-, -$SO_2$-, einer direkten C-C-Bindung und -$C(CH_3)_2$-, p und q jeweils 0 oder 1 sind und $R^4$ und $R^5$ $C_1$-$C_6$Alkyl, $C_2$-$C_6$Alkenyl oder $C_2$-$C_6$Alkinyl bedeuten.

4. Zusammensetzungen gemäss Anspruch 1, worin der Rest $R^3$ sich ableitet von einem einkernigen Aminophenol oder einkernigen Polyphenol.

5. Zusammensetzungen gemäss Anspruch 1, worin die im wesentlichen von Isocyanatgruppen freie Verbindung der Formel I wenigstens zwei freie phenolische Hydroxylgruppen aufweist und erhältlich ist durch Umsetzung von

a) einem präpolymeren Polyisocyanat, welches

a1) ein Addukt eines Polyisocyanats an eine präpolymere Polyhydroxyl-oder Polysulfhydrylverbindung oder an ein Gemisch solcher Verbindungen gegebenenfalls in Kombination mit einem Kettenverlängerer ist, oder

a2) sich ableitet von einem präpolymeren Polyetheramin, mit

b) mindestens einem Phenol mit zwei oder drei phenolischen Hydroxylgruppen oder mit einem Aminophenol mit ein oder zwei phenolischen Hydroxylgruppen.

6. Zusammensetzungen gemäss Anspruch 5, worin Komponente a) ein präpolymeres Polyisocyanat ist, das eine mittlere Isocyanatfunktionalität von 2 bis 3 besitzt.

7. Zusammensetzungen gemäss Anspruch 5, worin Komponente a1) ein Addukt eines Polyisocyanats an ein hydroxyl-terminiertes Präpolymeres mit einem mittleren Molekulargewicht von 150-10000 ist.

8. Zusammensetzungen gemäss Anspruch 5, worin die Aufbaukomponente zur Herstellung von Komponente a1) ein hydroxyl-terminierter Polyether oder Polyester ist.

9. Zusammensetzungen gemäss Anspruch 5, worin die Aufbaukomponente zur Herstellung von Komponente a1) ein Gemisch aus einem hydroxyl-terminierten Polybutadien und einem hydroxyl-terminierten Polyalkylenglykol ist oder ein hydroxyl-terminiertes Polyalkylenglykol mit aufgepfropften 1-Olefinen ist.

10. Zusammensetzungen gemäss Anspruch 5, worin die Aufbaukomponente zur Herstellung von Komponente a1) ein hydroxyl-terminiertes Polyalkylenglykol ist.

11. Zusammensetzungen gemäss Anspruch 1 enthaltend der Formel V

$$[\{(HO\!\!-\!\!)_m R^3-Y-\overset{O}{\overset{\|}{C}}-NH\!\!-\!\!)_r R^{13}-NH-\overset{O}{\overset{\|}{C}}-O\!\!-\!\!]_n R^{14} \qquad (V)$$

worin $R^3$, m und n die im Anspruch 1 definierte Bedeutung besitzen, r eine ganze Zahl zwischen 1 und 3 ist, Y -O- oder -NH- bedeutet, $R^{13}$ der r+1-wertige Rest eines aliphatischen, cycloaliphatischen, aromatischen oder araliphatischen Polyisocyanats nach dem Entfernen der Isocyanatgruppen ist, $R^{14}$ ein n-wertiger hydroxyl-terminierter Polyester- oder Polyetherrest nach dem Entfernen der enständigen OH-Gruppen ist, mit der Massgabe, dass der Index m und die Reste $R^3$ und $R^{13}$ innerhalb eines gegebenen Moleküls unterschiedlich sein können.

12. Zusammensetzungen gemäss Anspruch 11, worin m 1 ist, n 2 oder 3 bedeutet, r 1 ist, Y -O- ist, $R^{13}$ sich ableitet von einem aliphatischen, cycloaliphatischen oder aromatischen Diisocyanat und $R^{14}$ ein zwei- oder dreiwertiger Rest eines hydroxyl-terminierten Polyesters oder Polyethers mit einem Molekulargewicht von 150 bis 10000 nach dem Entfernen der endständigen Hydroxylgruppen ist.

13. Zusammensetzungen gemäss Anspruch 11, worin m 1 ist, n 2 oder 3 bedeutet, r 1 ist, Y -O- ist, $R^{13}$ sich ableitet von einem aliphatischen oder cycloaliphatischen Diisocyanat und $R^{14}$ ein zwei- oder dreiwertiger Rest eines Polyalkylenetherpolyols mit einem Molekulargewicht von 150 bis 3000 nach dem Entfernen der endständigen Hydroxylgruppen ist.

14. Zusammensetzungen gemäss Anspruch 13, worin n 2 bedeutet und $R^{14}$ ein Strukturelement der Formel VI ist,

$$-(C_sH_{2s}-O)_x-C_sH_{2s}- \qquad (VI)$$

worin s 3 oder 4 bedeutet, x eine ganze Zahl von 5 bis 40 ist und die Einheiten $-C_sH_{2s}-O-$ innerhalb eines gegebenen Strukturelementes der Formel VI im Rahmen der gegebenen Definitionen unterschiedlich sein können.

15. Zusammensetzungen gemäss Anspruch 1, worin die Verbindung der Formel I erhältlich ist durch Umsetzung von

a) einem Addukt einer im wesentlichen äquivalenten Menge eines Diisocyanates mit einem Gemisch aus einem di- oder tri-hydroxyl-terminierten Polyether oder Polyester und weniger als 1 Gew.-%, bezogen auf das hydroxyl-terminierte Präpolymere, eines kurzkettigen Diols oder Triols und

b) einer dem NCO-Gehalt im wesentlichen äquivalenten Menge eines Bisphenols oder Trisphenols.

16. Zusammensetzungen gemäss Anspruch 1 enthaltend Verbindungen der Formel VII

$$\left[(HO\text{—})_{m}R^{3}\text{-}Y\text{-}(\text{-}\overset{O}{\overset{\|}{C}}\text{-}NH\text{-}R^{15}\text{-})_{t}\overset{O}{\overset{\|}{C}}\text{-}NH\text{-}\right]_{n}R^{16} \qquad (VII),$$

worin $R^3$, m und n die in Anspruch 1 definierte Bedeutung besitzen, Y -O- oder -NH- ist, t 0 oder 1 ist, $R^{15}$ der zweiwertige Rest eines aliphatischen, cycloaliphatischen, aromatischen oder araliphatischen Diisocyanats nach dem Entfernen der Isocyanatgruppen ist und $R^{16}$ der n-wertige Rest eines amino-terminierten Polyalkylenethers nach dem Entfernen der endständigen $NH_2$-Gruppen ist.

17. Zusammensetzungen gemäss Anspruch 16, worin m 1 ist, n 2 oder 3 bedeutet, Y -O- ist, $R^{15}$ sich ableitet von einem aliphatischen, cycloaliphatischen oder aromatischen Diisocyanat und $R^{16}$ ein zwei- oder dreiwertiger Rest eines amino-terminierten Polyalkylenethers mit einem Molekulargewicht von 150 bis 10000 nach dem Entfernen der endständigen Aminogruppen ist.

18. Zusammensetzungen gemäss Anspruch 16, worin m 1 ist, n 2 bedeutet, t 0 ist, Y -O- bedeutet und $R^{16}$ sich ableitet von einem zweiwertigen amino-terminierten Polyalkylenether mit einem Molekulargewicht von 150 bis 6000.

19. Zusammensetzungen gemäss Anspruch 16, worin m und t 1 sind, n 2 bedeutet, $R^{15}$ der zweiwertige Rest eines aliphatischen oder cycloaliphatischen Diisocyanats nach dem Entfernen der Isocyanatgruppen ist und $R^{16}$ sich ableitet von einem zweiwertigen amino-terminierten Polyalkylenether mit einem Molekulargewicht von 150 bis 6000.

20. Verfahren zur Herstellung von Verbindungen der Formel I gemäss Anspruch 1 umfassend die Umsetzung einer Verbindung oder mehrerer Verbindungen der Formel IIa mit einer Verbindung oder mehreren Verbindungen der Formel IIIa

$R^1\text{—}(NCO)_n$ (IIa),

$H\text{-}X\text{-}R^3\text{—}(OH)_m$ (IIIa),

wobei die Verbindung(en) der Formel IIIa in einer solchen Menge anwesend ist (sind), dass die freien NCO-Gruppen der Verbindung(en) der Formel IIa im wesentlichen durch die Reaktion verbraucht werden, dass pro Verbindung der Formel IIIa vorwiegend eine OH- oder $NH_2$-Gruppe reagiert, und worin $R^1$, $R^3$, X, m und n die in Anspruch 1 definierte Bedeutung besitzen.

21. Verfahren zur Herstellung von Verbindungen der Formel I gemäss Anspruch 1, worin X $-NR^2-$ bedeutet, umfassend die Umsetzung einer Verbindung oder mehrerer Verbindungen der Formel IIb mit einer Verbindung oder mehreren Verbindungen der Formel IIIb

$R^1\text{—}(NR^2H)_n$ (IIb),

$R^{11}\text{-}O\text{-}\overset{O}{\overset{\|}{C}}\text{-}NR^2\text{-}R^3\text{—}(OH)_m$ (IIIb),

wobei die Komponenten IIb und IIIb im wesentlichen in stöchiometrischem Verhältnis vorgegeben werden oder worin Komponente IIIb in geringem Ueberschuss vorliegt, so dass durch Erhitzen des Gemisches praktisch alle freien Aminogruppen von IIb verkappt werden, und worin $R^1$, $R^2$, $R^3$, m und n die in Anspruch 1 definierte Bedeutung besitzen, und $R^{11}$ ein Alkyl-oder Arylrest ist.

22. Verfahren zur Herstellung von Verbindungen der Formel I gemäss Anspruch 1 mit ortho- oder peri-Phenolen oder -Aminophenolen als Endgruppen, umfassend die Umsetzung einer Verbindung oder mehrerer Verbindungen der Formel IIb mit einer Verbindung oder mehreren Verbindungen der Formel IIIc

$R^1\text{—}(NR^2H)_n$ (IIb),

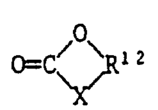
(IIIc),

wobei die Komponenten IIb und IIIc im wesentlichen in stöchiometrischem Verhältnis vorgegeben werden oder worin Komponente IIIc in geringem Ueberschuss vorliegt, so dass durch Erhitzen des Gemisches praktisch alle freien Aminogruppen von IIb verkappt werden, und worin $R^1$, $R^2$, X und n die in Anspruch 1 definierte Bedeutung besitzen, und $R^{12}$ ein zweiwertiger carbocyclisch-aromatischer Rest mit einer der für $R^3$ gemäss Anspruch 1 definierten Bedeutungen ist, an dem die Gruppen -O- und -X- sich jeweils in ortho- oder peri-Stellung zueinander befinden.

23. Verfahren gemäss Anspruch 20 umfassend die Umsetzung von

a) einem präpolymeren Polyisocyanat, welches

a1) ein Addukt eines Polyisocyanats an eine präpolymere Polyhydroxyl-oder Polysulfhydrylverbindung oder an ein Gemisch solcher Verbindungen gegebenenfalls in Kombination mit einem Kettenverlängerer ist, oder

a2) sich ableitet von einem präpolymeren Polyetheramin, mit

b) mindestens einem Phenol mit zwei oder drei phenolischen Hydroxylgruppen oder mit einem Aminophenol mit ein oder zwei phenolischen Hydroxylgruppen.

24. Verfahren gemäss Anspruch 20 umfassend die Umsetzung von

a) einem Addukt einer im wesentlichen äquivalenten Menge eines Diisocyanats mit einem Gemisch aus einem di- oder tri-hydroxyl-terminierten Polyether oder Polyester und weniger als 1 Gew.%, bezogen auf das hydroxyl-terminierte Präpolymere, eines kurzkettigen Diols oder Triols und

b) einer dem NCO-Gehalt im wesentlichen äquivalenten Menge eines Bisphenols oder Trisphenols.

25. Verfahren zur Herstellung schmelzbarer abar noch härtbarer Addukte, dadurch gekennzeichnet, dass man eine Zusammensetzung enthaltend Komponenten i) und ii) gemäss Anspruch 1 in an sich bekannter Weise erhitzt.

26. Verfahren zur Herstellung gehärteter Produkte, dadurch gekennzeichnet, dass man eine Zusammensetzung enthaltend Komponenten i) und ii) gemäss Anspruch 1 in Gegenwart eines Härters für Epoxidharze härtet.

27. Verwendung der Zusammensetzungen gemäss Anspruch 1 oder der Addukte gemäss Anspruch 25 als Klebstoffe, Klebfilme, Matrixharze, Lacke, Dichtungsmassen oder Patches.

28. Verwendung der Verbindungen der Formel I gemäss Anspruch 1 als Flexibilisatoren für Epoxidharze.

Europäisches Patentamt

# EUROPÄISCHER RECHERCHENBERICHT

Nummer der Anmeldung

EP 88 11 3697

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 423 201 (D.D. HICKS) * Ansprüche 1-5,9,17; Spalte 3, Zeilen 19-28; Spalte 4, Zeilen 4-9 * | 1-8,10-13,20,24 | C 08 G 18/10<br>C 08 G 18/32<br>C 08 G 18/67<br>C 08 G 18/77<br>C 08 G 71/00<br>C 08 L 63/00<br>C 09 J 3/16<br>C 09 K 3/10<br>C 09 D 3/58 |
| A | FR-A-1 326 963 (CO. BOSTON) * Zusammenfassung, Punkte A1,A3; Seite 2, rechte Spalte, letzter Absatz - Seite 3, linke Spalte, Absatz 1 * | 1-8,20 | |
| A | US-A-4 396 647 (G.L. LINDEN) * Ansprüche 1-8; Spalte 3, Zeilen 46-55 * | 1 | |
| A | FR-A-1 518 546 (BAYER) * Zusammenfassung; Seite 2, linke Spalte, Absätze 3,4; rechte Spalte, Absätze 2-4 * | 1 | |
| A | US-A-3 442 974 (B.J. BREMMER) * Anspruch 1; Spalte 2, Zeilen 1-35; Spalte 4, Zeile 73 - Spalte 5, Zeile 2 * | 1,24 | **RECHERCHIERTE SACHGEBIETE (Int. Cl.4)** |
| A | FR-A-1 269 477 (BEXFORD LTD) * Zusammenfassung, Punkte 1,2A; Seite 2, rechte Spalte, Absatz 2 - Seite 3, linke Spalte, Absatz 1 * | 1 | C 08 G<br>C 08 L |
| A | CHEMICAL ABSTRACTS, Band 97, Nr. 18, November 1982, Seite 79, Zusammenfassung Nr. 146252h, Columbus, Ohio, US; V. MIKHEEV et al.: "Polyurethane coatings made of polyamines and oligomers with phenyl carbonate groups", & LAKOKRAS. MATER. IKH PRIMEN. 1982, (4), 11-13 | 1 | |

Der vorliegende Recherchenbericht wurde für alle Patentansprüche erstellt

| Recherchenort | Abschlußdatum der Recherche | Prüfer |
|---|---|---|
| DEN HAAG | 06-12-1988 | VAN PUYMBROECK M.A. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)